# EUROPÄISCHE PATENTSCHRIFT

(11) **EP 4 311 135 B1**
(45) Veröffentlichungstag und Bekanntmachung des Hinweises auf die Patenterteilung: **09.04.2025**
(21) Anmeldenummer: 23185713.7
(22) Anmeldetag: 17.07.2023
(51) Int. Cl.: H04J 3/06, G05B 19/00

(54) **ZEITSYNCHRONISATION ZWISCHEN EINEM MASTER UND EINEM SLAVE IN EINEM NETZWERK**
TIME SYNCHRONIZATION BETWEEN A MASTER AND A SLAVE IN A NETWORK
SYNCHRONISATION TEMPORELLE ENTRE UN MAÎTRE ET UN ESCLAVE DANS UN RÉSEAU

(30) Priorität: 19.07.2022 AT 505402022
(43) Veröffentlichungstag der Anmeldung: 24.01.2024
(73) Patentinhaber: ABB Schweiz AG, 5400 Baden (CH)
(72) Erfinder: Hoeftberger, Oliver, 5142 Eggelsberg (AT); Profelt, Franz, 5142 Eggelsberg (AT)
(74) Vertreter: Patentanwälte Pinter & Weiss OG

(56) Entgegenhaltungen:
- CN-A- 111 953 469
- US-B2- 7 356 617
- LESI VUK ET AL: "Synchronization of Distributed Controllers in Cyber-Physical Systems", 2019 24TH IEEE INTERNATIONAL CONFERENCE ON EMERGING TECHNOLOGIES AND FACTORY AUTOMATION (ETFA), IEEE, 10 September 2019 (2019-09-10), pages 710 - 717, XP033633653, DOI: 10.1109/ETFA.2019.8869467
- AOUN MARC ET AL: "Distributed Task Synchronization in Wireless Sensor Networks", 11 February 2009, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 150 - 165, ISBN: 978-3-540-74549-5, XP047397617

## Beschreibung

Die gegenständliche Erfindung beschreibt ein Verfahren zur Zeitsynchronisation zwischen zumindest einem Master und zumindest einem Slave in einem Netzwerk, wobei der zumindest eine Master eine Masterzeit vorgibt und zumindest eine Synchronisationsnachricht mit der Masterzeit über das Netzwerk an den zumindest einen Slave sendet. Der zumindest eine Slave, auf welchem eine Slavezeit läuft, verwendet dabei die Synchronisationsnachricht, um die Slavezeit an die Masterzeit mittels Synchronisation anzugleichen, wobei der zumindest eine Slave ein interruptfähiger Netzwerkteilnehmer des Netzwerkes ist und einen Timer verwendet, welcher auf die Slavezeit zugreift, um zumindest einen in vorgegebenen regelmäßigen Zyklusdauern wiederholenden Interrupt zu jeweils einem, auf die Slavezeit synchronisierten Auslösezeitpunkt zu erzeugen, und wobei bei Eintreffen einer Synchronisationsnachricht im Slave ein Zeitversatz zwischen der Masterzeit und der Slavezeit ermittelt wird.

Prinzipiell können ganz verschiedene Hardwarekomponenten, wie zentrale Recheneinheiten, Bus-Module, Antriebsmodule, Bus-Koppler, IO-Module mit integrierter Netzwerk-Anbindung, Kameras, HMI-Geräte, netzwerkintegrierte Sensoren und Aktoren, Netzwerk-Infrastruktur (Switches, Bridges etc.) usw., als Netzwerkteilnehmer eines Netzwerkes vorgesehen sein. Jeder Netzwerkteilnehmer in einem Netzwerk hat zumindest eine Uhr, über welche die Arbeitsabläufe im Netzwerkteilnehmer selbst gesteuert werden. Diese Uhr kann beispielsweise die beanspruchbare CPU-Rechendauer eines jeden Computerprozesses vorgeben. Auch Arbeitsabläufe zwischen Netzwerkteilnehmern im Netzwerk werden über die Uhr abgeglichen. Damit kann die Steuerung von verschiedenen Arbeitsabläufen, an denen verschiedene Netzwerkteilnehmer in einem Netzwerk beteiligt sind, realisiert werden.

Man unterscheidet prinzipiell hardwarebasierte Uhren von logischen Uhren. Hardwarebasierte Uhren sind beispielsweise Quarzoszillatoren mit Zählregister, wobei der Quarzoszillator regelmäßige Schwingungen vorgibt, die dann vom Zählregister erfasst werden. Solche hardwarebasierten Uhren weisen eine Abhängigkeit von physikalischen Größen, wie Temperatur, Luftdruck, Umgebungsfeuchte etc., auf. Daher kann der Standort eines Netzwerkteilnehmers Auswirkungen auf den Quarzoszillator haben und diese Veränderungen können in unterschiedlichen Takt- bzw. Frequenzraten einer hardwarebasierten Uhr resultieren. Während sich daraus für einen isolierten Netzwerkteilnehmer oftmals keine Konsequenzen ergeben, kann im Netzwerk mit verschiedenen Netzwerkteilnehmern eine Zeitsynchronisation zwischen Uhren der verschiedenen Netzwerkteilnehmer, welche mit unterschiedlicher Frequenz laufen, erforderlich werden.

Bei einer logischen Uhr, kommt das Taktsignal über eine Unterbrechungsanforderung von der Hardware, wie beispielsweise von einer hardwarebasierten Uhr. Die logische Uhr muss also nach dem Einschalten eines Netzwerkteilnehmers erst eingestellt werden. Eine logische Uhr ist eine Komponente eines Computersystems, welche dafür verwendet werden kann, Ereignissen, wie Arbeitsabläufen in einem Netzwerk, einen eindeutigen Zeitstempel zu geben.

Durch einen Zeitstempel wird einem Ereignis ein eindeutiger Zeitpunkt zugeordnet. Die Genauigkeit dieses Zeitstempels hängt maßgeblich von der Genauigkeit einer logischen Uhr ab. Ereignisse sind beispielsweise verschiedene physikalische Arbeitsabläufe in einer Produktionsanlage, können aber auch digitaler Natur sein, wie die Kommunikation zwischen verschiedenen Netzwerkteilnehmern. Als physikalische Arbeitsabläufe können beispielsweise Bewegungen von Maschinenteilen oder Gütern z.B. auf einer Maschine oder ein Bearbeitungsschritt auf einer Bearbeitungsmaschine ablaufen. Die physikalischen Arbeitsabläufe können von als Aktoren ausgelegten Netzwerkteilnehmern initiiert oder ausgeführt werden und von als Sensoren ausgelegten Netzwerkteilnehmern erfasst werden. So kann man beispielsweise bei Ausfall der Produktion anhand der Zeitstempel genau sagen, welche Komponente einer Maschine zu welchem Zeitpunkt für einen Ausfall verantwortlich war. Das erleichtert maßgeblich die Fehlersuche in hochkomplexen Produktionssystemen.

Eine Uhr eines Netzwerkteilnehmers kann sowohl als hardwarebasierte als auch logische Uhr ausgestaltet sein oder auch eine Kombination davon sein. Beispielsweise können zwei logische Uhren auf dieselbe hardwarebasierte Uhr zurückgreifen. Meist ist in einem Netzwerkteilnehmer zumindest eine hardwarebasierte Uhr eingebaut, welche zumindest jeweils eine Zeit im Netzwerkteilnehmer angibt. Solch eine Zeit zählt im Regelfall von einer ersten Initialisierung an durchgehend weiter, beispielsweise in vorgegebenen Bruchteilen von Sekunden. Der Quarzoszillator wirkt in einer solchen Uhr als Taktgeber. Damit diese Uhr nicht stehenbleibt, wenn das Gerät ausgeschaltet wird, kann die Uhr ständig von einer Spannungsquelle, also einer Batterie oder einem Akku, versorgt werden. Bei Spannungsverlust, beispielsweise bei leerer Knopfbatterie am Motherboard, würde diese Uhr dann von Neuem zu zählen beginnen, wenn eine neue Spannungsquelle eingesetzt wird.

Eine logische Uhr greift jetzt beispielsweise auf die oben genannte hardwarebasierte Uhr zu, um Arbeitsabläufe zu steuern und Ereignissen einen Zeitstempel zu geben.

Bei Uhren in einem Netzwerk kann es zu nicht vermeidbaren Ungenauigkeiten kommen, beispielsweise weil die verbauten Quarzoszillatoren aufgrund von Fabrikationsungenauigkeiten nicht mit exakt derselben Frequenz schwingen. Weiters können verschiedene Standorte der Netzwerkteilnehmer, dazu führen, dass ein Frequenzunterschied in den Quarzoszillatoren aufgrund äußerer Einflüsse entsteht oder noch zunimmt. Netzwerkteilnehmer können gemeinsam in einer Maschinenhalle stehen, oder aber auch räumlich weit voneinander getrennt sein. Beispielsweise können Temperaturunterschiede bedingt durch unterschiedliche Außentemperaturen, Klimatisierung, CPU-Erwärmung einen Einfluss auf den Quarzoszillator haben.

Um eine zeitgesteuerte Kommunikation mittels verschiedener Netzwerkteilnehmer zu ermöglichen oder andere zeitlich koordinierte Aktivitäten durchführen zu können, ist es nötig, die Uhren in verschiedenen Netzwerkteilnehmern, in unterschiedlichen Domänen von Netzwerken oder in unterschiedlichen Netzwerken, welche eine unterschiedliche Zeit aufweisen, miteinander abzugleichen. Im einfachsten Fall wird dazu ein Netzwerkteilnehmer im Netzwerk zu einem sogenannten Master ernannt und die anderen Netzwerkteilnehmer zu sogenannten Slaves. Ein Netzwerkteilnehmer, welcher ein Master ist, kann ein besonders leistungsstarker und ausfallssicherer Netzwerkteilnehmer sein. Der Master gibt dann den Slaves im Netzwerk eine Uhrzeit vor und regelt damit die Zeitsynchronisation. Im Regelfall gibt es mehrere Master in einem Netzwerk. Es kann auch möglich sein, dass die Masterrollen zwischen Netzwerkteilnehmem regelmäßig wechseln, beispielsweise bei Ausfall eines Netzwerkteilnehmers der als Master fungiert, oder beim Ausfall der Verbindung zwischen verschiedenen Teilen von Netzwerken.

Es kann auch sein, dass sich verschiedene Netzwerke zeitlich aufeinander synchronisieren. Innerhalb jedes Netzwerkes gibt es dann einen Master für die Zeitsynchronisation. Ein Master eines zweiten Netzwerkes agiert zur Zeitsynchronisation zwischen den Netzwerken als Slave des Masters eines ersten Netzwerkes. Der als Slave agierende Master des zweiten Netzwerkes synchronisiert sich dann mit dem Master des ersten Netzwerkes. Danach kann dieser Master des zweiten Netzwerkes alle Slaves des zweiten Netzwerkes synchronisieren. Hierfür kann auch eine Netzwerkhierarchie festgelegt sein, gemäß der festgelegt ist, in welcher Reihenfolge sich die einzelnen Netzwerke aufeinander synchronisieren. Somit kann der Master des zweiten Netzwerkes eine eigene Uhrzeit im zweiten Netzwerk vorgeben, welche z.B. mit einer Masterzeit des ersten Netzwerkes über eine Zeitsynchronisation abgeglichen wird. Beispielsweise kann ein Netzwerkteilnehmer als Master in einem Netzwerk agieren, solange er keine Zeitsynchronisation eines Masters eines hierarchisch darüberliegenden Netzwerkes erhält. Es ist beispielsweise denkbar, dass ein Netzwerk in einer Maschine, welches alleine laufen kann und selbst Netzwerkteilnehmer - d.h. zumindest einen Master und einen Slave - enthält, zuerst eine Zeitsynchronisation intern durchführt. Bei Integration dieser Maschine in eine Produktion kann es dann nötig sein, dass das Netzwerk der Maschine mit einem hierarchisch höheren Netzwerk, beispielsweise einem Netzwerk der Produktionsanlage, synchronisiert wird. Es ist auch denkbar, dass verschiedene Domänen eines Netzwerkes von einem Master synchronisiert werden.

Oftmals gibt es in einem Netzwerk aber nicht nur einen Master für eine Uhr, sondern eine Mehrzahl an Mastern, sogenannte "Standby-Master". Solange der ursprüngliche Master die Zeitsynchronisation bezüglich einer Uhr durchführt, verhalten sich die Standby-Master wie Slaves. So kann, wenn der erste Master ausfällt, einer der Standby-Master übernehmen und die Zeitsynchronisation durchführen.

Weiters können Master für die Zeitsynchronisation hinsichtlich anderer Aufgaben nur einfache Slaves sein. Die Ausdrücke "Master" und "Slave" beziehen sich in der gegenständlichen Erfindung ausschließlich auf die Zeitsynchronisation in einem Netzwerk und nicht auf andere Funktionalitäten z.B. in einem Produktionsprozess. Sowohl Master und Slaves sind aber Netzwerkteilnehmer in einem Netzwerk.

Im Regelfall erfolgt ein Abgleich der Uhren in einem Netzwerk über eine Synchronisation. Dabei wird eine vollständige Anpassung der Zeit zwischen Master und Slave vorgenommen. Der Slave gleicht sowohl die Frequenz als auch die Zeitdifferenz ab. Unter Zeitdifferenz versteht man den konkreten Unterschied zwischen der Uhr des Masters und des Slaves. Ein Master hat beispielsweise eine Uhrzeit von 13:02, und ein Slave von 13:05. Jetzt wird die Uhrzeit des Slaves von 13:05 auf 13:02 gestellt und der Slave gleicht aufgrund der Kenntnis über die Zeit im Master, beispielsweise aufgrund von Synchronisationsnachrichten vom Master an den Slave, die Frequenz ab, damit die Uhren gleich schnell laufen. Ein genauer Abgleich der Frequenzen kann auch erst nach einer gewissen Anzahl an Synchronisationsnachrichten möglich sein.

Um Zeitsprünge möglichst zu vermeiden, kann die Frequenz des Slaves beschleunigt oder verzögert werden, damit die Uhren in Master und Slave sich abgleichen. Dieser Prozess kann bei hohen Abweichungen von Master und Slave jedoch lange dauern und zu anhaltenden Fehlern vor allem in der Frequenz führen.

Ein alleiniger Abgleich der Frequenzen kann über Syntonisation erfolgen. Unter Syntonisation versteht man die Anpassung der Frequenz zwischen einem Master und einem Slave in einem Netzwerk, ohne dass ein Abgleich einer Zeitdifferenz, wie bei der Synchronisation angewandt wird. So würden die Uhrzeiten, wie im obigen Beispiel, nicht auf die Uhrzeit des Masters mittels Sprungs korrigiert werden, sondern die Uhrzeiten würden mit gleicher Differenz weiterlaufen. Dadurch wird zumindest verhindert, dass die Differenz größer wird, wenn beide Uhren die gleiche Frequenz aufweisen. Außerdem werden auf diese Weise z.B. Sprünge in der Uhr verhindert. Weiterhin würde die Zeit in den Netzwerkteilnehmern auch gleich schnell vergehen, wodurch lokal gemessene Zeiträume vergleichbar werden.

Der Stand der Technik für die Zeitsynchronisation ist heutzutage der PTP (Precision Time Protocol) - Standard (IEEE 1588) der IEEE. Dieser sieht vor, dass jede Uhr in einem Netzwerkteilnehmer über das Netzwerk separat mit einem Master synchronisiert wird. Beispielsweise kann eine Uhr auf Basis des Standards mit anderen Uhren im Netzwerk abgeglichen werden.

Synchronisierte Anwendungen, wie beispielsweise hochgenaue Arbeits- bzw. Produktionsabläufe, werden über zumindest einen Timer in einem Netzwerkteilnehmer gesteuert. Ein Timer kontrolliert zyklische Prozesse in einem System, in dem er in regelmäßigen Intervallen (Zyklusdauer) eine Unterbrechungsanforderung - einen so genannten Interrupt - ausgibt. Mit jedem Interrupt wird ein sich zyklisch wiederholender Prozess (im Wesentlichen ein Stück im Netzwerkteilnehmer laufender Programmcode) durchgeführt. Das kann beispielsweise für gegenwärtige und zukünftige Ereignisse, wie ein Schritt in einem Produktionsablauf, wichtig sein, welche zu einem vordefinierten Interrupt des Timers auslösen sollen. Ein Timer kann beispielsweise einen Interrupt alle 100 Mikrosekunden (µs) auslösen, oder auch in längeren oder kürzeren Zeitintervallen. Ein Timer ist üblicherweise konfiguriert, um die gewünschten oder benötigten Interrupts auszulösen. Der Timer kann auch ausgebildet sein, Interrupts zu unterschiedlich vorgegebenen Zeitpunkten auszulösen.

Beim Starten eines Produktionsablaufs kann im Regelfall eine vorgegebene Zeit zugewartet werden, bis die Uhren aller Netzwerkteilnehmer synchronisiert sind und sich auch die Zyklusdauer aller Interrupts eingestellt hat, weil beim Starten aufgrund von Ungenauigkeiten der Schwingquarze die Zyklusdauer der einzelnen Interrupts in den Netzwerkteilnehmern beispielsweise unterschiedliche Frequenzen aufweisen können. Es ist auch möglich, dass ein Netzwerkteilnehmer mehrere verschiedene Interrupts ausgibt. Das ist beispielsweise möglich, wenn mehrere Prozesse auf einen Netzwerkteilnehmer zugreifen, oder der Netzwerkteilnehmer mehrere Prozesse steuern muss. Dann können Interrupts auch unterschiedliche Zyklusdauern haben, beispielsweise 200 µs und 1000 µs.

Allerdings kann ein Verlust der Verbindung während eines laufenden Prozesses zu Problemen in der Zeitsynchronisation führen. Ein Verbindungsverlust kann beispielsweise ungewollt passieren, über einen Verlust der Konnektivität, beispielsweise Durchtrennen eines Kabels oder Ausfall eines Switches, Modems oder Router, oder Verlust einer GPS-Verbindung eines KFZs bei Eintritt in einen Tunnel. Dann können Netzwerkteilnehmer oder ganze hierarchisch untergeordnete Netzwerke systemintern weiterarbeiten, aber auch in einen Abschalt- oder Stand-by-Modus wechseln, Herunterfahren oder wenn keine Sicherungsautomatik vorhanden ist, auch Abstürzen. Bei neuerlichem Starten des Netzwerkteilnehmers bzw. bei Wiederverbindung kann die Zeitsynchronisation bis zu einer nächsten Synchronisationsnachricht verloren sein. Auch ist es möglich und auch wahrscheinlich, dass Interrupts dann nichtmehr korrekt laufen.

Es kann aber auch gewollte Unterbrechungen der Verbindung geben, beispielsweise bei autonom fahrenden Fahrzeugen, welche von ihrer Basisstation über einen gewissen Zeitraum getrennt sind.

Dann kann es passieren, dass die Zyklusdauer der Interrupts zwischen den verschiedenen Netzwerkteilnehmern auseinanderläuft. Im Stand der Technik wird die Zeit zwischen Slave und Master mittels eines einzigen Synchronisationsschrittes wieder angepasst. Das kann zur Folge haben, dass die tatsächliche Zyklusdauer des Interrupts zum Zeitpunkt der Synchronisationsnachricht, vor allem verkürzt oder auch verlängert werden kann. Folglich kann das zu Problemen in der zeitlichen Abfolge und Stabilität von hochpräzisen Arbeitsabläufen, an denen mehrere Netzwerkteilnehmer beteiligt sein können, führen.

Aus Lesi Vuk et al.: "Synchronization of Distributed Controllers in Cyber-Physical Systems", in 2019 IEEE International Conference on Emerging Technologies and Factory Automation (EFTA), September 2019, pp. 710 - 717 beschreibt die Synchronisation von verteilten Steuereinheiten. Dabei wird eine Kompensation eines Zeitversatz zwischen einer Masterzeit und einer Slavezeit in mehreren kleinen Schritten vorgenommen.

Auch aus der US 7,356,617 B2 ist ein Automatisierungssystem bekannt, bei welchem eine Zeitsynchronisation mittels Zeitstempeln erfolgt. Aus den Zeitstempeln wird ein Korrekturwert abgeleitet und die auf einer Slave-Seite periodische Timer durch die Slave-Uhr synchronisiert.

Aus Marc Aoun et al.: "Distributed Task Synchronization in Wireless Sensor Networks", in Wireless Sensor Networks, 2009, Volume 5432, pp. 150 - 165 offenbart ebenfalls die Aufteilung eines Zeitversatzes. Dabei wird der Zeitversatz durch eine Kombination aus einer periodischen Sofortkorrektur, welche als Major Correction Steps (MCS) bezeichnet wird, und einer Korrekturphase - Skew Compensation Phase (SCP), die sich über mehrere aufeinanderfolgende Timerrunden erstreckt, kompensiert.

Weiterhin ist aus der CN 111 953 469 A ein Verfahren zum Synchronisieren eines Servotreibers mit einer Ethercat DC Clock bekannt. Dabei wird bei Eintreffen eines Synchronisationssignals eine Abweichung der Slavezeit von der DC-Zeit in einem DC-Synchronisationszyklus in Echtzeit ermittelt. Diese Abweichung wird zwar auf mehrere Intervalle aufgeteilt, allerdings wird die Zyklusdauer eines Interrupts angepasst. Dies erfolgt allerdings nur für Abweichungen, die kleiner als ein Grenzwert sind, für Abweichungen, die größer als der Grenzwert sind, wird ein Alarm ausgelöst.

Es ist daher die Aufgabe der gegenständlichen Erfindung, eine Zeitsynchronisation zur Verfügung zu stellen, welche die Unterbrechungen von Arbeitsabläufen verhindert.

Die Aufgabe wird erfindungsgemäß dadurch gelöst, dass bei Eintreffen einer Synchronisationsnachricht im Slave bzw. im interruptfähigen Netzwerkteilnehmer, welcher als Slave fungiert, ein Zeitversatz zwischen der Masterzeit und der Slavezeit ermittelt wird. Aus dem Zeitversatz wird dann ein Zeitanteil ermittelt, welcher einem ganzzahligen Vielfachen der vorgegebenen Zyklusdauer des zumindest einen Interrupts entspricht, und dann aus dem Zeitanteil sowie dem Zeitversatz - z.B. als Differenz - ein Interruptversatz abgeleitet. Für einen Ausgleich des gesamten Zeitversatzes zwischen der Masterzeit und der Slavezeit wird dann im Slave bzw. im als Slave fungierenden, interruptfähigen Netzwerkteilnehmer zumindest ein Zeitsprung ausgeführt. Dann wird ein erster, auf den zumindest einen Zeitsprung folgender Auslösezeitpunkt des zumindest einen Interrupts derart gesetzt, dass dieser in Bezug auf den letzten Auslösezeitpunkt vor dem zumindest einen Zeitsprung um die vorgegebene Zyklusdauer versetzt ist. Weiterhin wird eine Anzahl von auf den zumindest einen Zeitsprung folgenden Auslösezeitpunkten des zumindest einen Interrupts um eine Anpassungsdauer zeitlich verschoben, wobei die Anpassungsdauer für jeden der Anzahl der auf den zumindest einen Zeitsprung folgenden Auslösepunkte aus einem Zeitbereich derart gewählt wird, dass die Anpassungsdauer höchstens dem Interruptversatz sowie höchstens einer vorgegebenen, zeitlichen Abweichung entspricht, und dass die Summe aller Anpassungsdauern für die Anzahl der auf den zumindest einen Zeitsprung folgenden Auslösezeitpunkte dem Interruptversatz unter Berücksichtigung eines vorgegebenen Toleranzwertes (z.B. plus/minus dem vorgegebenen Toleranzwert) entspricht.

Der Hauptaspekt der Erfindung besteht darin, dass zuerst in einem ersten Synchronisationsschritt der Zeitversatz und damit eine sehr große Zeitdifferenz zwischen Master und Slave im Netzwerk durch zumindest einen Zeitsprung ausgeglichen wird, ohne dass ein Betrieb der Produktion bzw. laufende Arbeitsabläufe und insbesondere echtzeitfähige Anwendungen in ihrem Ablauf gestört werden, da üblicherweise die Interrupts eine höhere Frequenz aufweisen als der Empfang der Synchronisationsnachrichten. Im folgenden Verlauf des Verfahrens wird dann der Auslösezeitpunkt des zumindest einen sich wiederholenden Interrupts solange angepasst, bis ein sich nach dem zumindest einen Zeitsprung ergebender Interruptversatz gegenüber den anderen interruptfähigen Netzwerkteilnehmern ausgeglichen ist. Dabei wird die Anpassungsdauer so gewählt, dass sie den Interruptversatz nicht überschreitet und dass die vorgegebene Zyklusdauer des zumindest einen Interrupts nicht zu sehr vergrößert oder verkürzt wird. Dadurch wird sichergestellt, dass eine tatsächliche Zyklusdauer des zumindest einen Interrupts nach dem zumindest einen Zeitsprung bzw. während der Anpassung an die anderen Netzwerkteilnehmer gegenüber der vorgegebenen Zyklusdauer nur unwesentlich verkürzt oder verlängert ist. Vor allem hochgenaue Arbeitsabläufe und/oder echtzeitfähige Anwendungen in einem Netzwerk, wie z.B. einer Anlage, einer Maschine, etc. werden damit nicht gefährdet, da z.B. Programmcodes vollständig ausgeführt oder z.B. Regelparameter nicht fehlerhaft berechnet werden.

Dabei ist es von Vorteil, wenn der interruptfähige Netzwerkteilnehmer als ein weiteres Netzwerk mit einem weiteren Master ausgestaltet ist. Dabei gibt der zumindest eine Master des Netzwerkes dem weiteren Master des weiteren Netzwerkes die Masterzeit vor. Auf diese ist es möglich, die Zeitsynchronisation auf sehr einfache und effiziente Weise in zwei oder mehreren Netzwerken durchzuführen. Dabei kann z.B. jedes Netzwerk autonom eine Zeitsynchronisation durchführen und dann z.B. das weitere Netzwerk sehr leicht mit dem Netzwerk synchronisiert werden. Dadurch können z.B. Anlagen mit mehreren, verbundenen Netzwerken hochgefahren werden oder z.B. ein weiteres Netzwerk zu einem bestehenden Netzwerk hinzugefügt und mit diesem synchronisiert werden.

Die Lösung der Aufgabe erfolgt weiterhin durch ein Netzwerk bestehend aus einer Mehrzahl an Netzwerkteilnehmern, wobei in Bezug auf eine Zeitsynchronisation zumindest ein Netzwerkteilnehmer ein Master und zumindest ein weiterer Netzwerkteilnehmer ein Slave ist. Dabei weist der Master bzw. der als Master fungierende Netzteilnehmer eine Masterzeit auf und ist dazu ausgebildet, zumindest eine Synchronisationsnachricht an den zumindest einen Slave bzw. an den zumindest einen weiteren, als Slave fungierenden Netzteilnehmer zu senden, welcher eine Slavezeit aufweist. Der zumindest eine Slave ist weiterhin dazu ausgebildet, die Slavezeit mittels Zeitsynchronisation an die Masterzeit anzugleichen. Weiterhin ist zumindest ein Netzwerkteilnehmer, insbesondere der als Slave fungierende Netzwerkteilnehmer, als interruptfähiger Netzwerkteilnehmer ausgebildet und weist einen Timer auf, welcher auf die Slavezeit zugreift, um zumindest einen Interrupt, welcher sich mit einer vorgegebenen Zyklusdauer wiederholt, zu jeweils einem, auf die Slavezeit synchronisierten Auslösezeitpunkt zu erzeugen. Weiterhin weist der interruptfähige Netzwerkteilnehmer eine Synchronisierungseinheit auf, welche dazu ausgebildet ist, die folgenden Schritte auszuführen:
- Ermitteln eines Zeitversatzes zwischen der Masterzeit und der Slavezeit bei Eintreffen einer Synchronisationsnachricht;
- Ermitteln eines Zeitanteils des Zeitversatzes, wobei der Zeitanteil einem ganzzahligen Vielfachen der vorgegebenen Zyklusdauer des zumindest einen Interrupts entspricht;
- Ermitteln eines Interruptversatzes als Differenz aus dem Zeitanteil und dem Zeitversatz;
- Ausführen zumindest eines Zeitsprungs zum Ausgleich des gesamten Zeitversatzes zwischen Masterzeit und Slavezeit;
- Setzen eines ersten, auf den zumindest einen Zeitsprung folgenden Auslösezeitpunktes des zumindest einen Interrupts derart, dass der erste, auf den zumindest einen Zeitsprung folgende Auslösezeitpunkt zum letzten Auslösezeitpunkt vor dem zumindest einen Zeitsprung um die vorgegebene Zyklusdauer versetzt ist;
- zeitliches Verschieben einer Anzahl von auf den zumindest einen Zeitsprung folgenden Auslösezeitpunkten des zumindest einen Interrupts um eine Anpassungsdauer, wobei die Anpassungsdauer für jeden Auslösezeitpunkt der Anzahl der auf den zumindest einen Zeitsprung folgenden Auslösezeitpunkte derart gewählt wird, dass die Anpassungsdauer höchstens dem Interruptversatz sowie höchstens einer vorgegebenen zeitlichen Abweichung entspricht, und dass die Summe aller Anpassungsdauern für die Anzahl der auf den zumindest einen Zeitsprung folgenden Auslösezeitpunkte dem Interruptversatz unter Berücksichtigung eines vorgegebenen Toleranzwertes entspricht.

Idealerweise ist der interruptfähige Netzwerkteilnehmer als weiteres Netzwerk mit einem weiteren Master ausgestaltet. Dabei kann der zumindest eine Master des Netzwerkes dem weiteren Master des weiteren Netzwerkes die Masterzeit vorgeben. Auf diese Weise können zwei oder mehrere Netzwerke z.B. in Anlagen oder nach Hinzufügen eines Netzwerkes synchronisiert werden. Idealerweise wird für die zeitliche Synchronisation eine Netzwerkhierarchie festgelegt, welche vorgibt, welches Netzwerk bzw. welcher Master eine übergeordnete und welches Netzwerk bzw. welcher Master eine untergeordnete Rolle übernimmt.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig. 1 ein erfindungsgemäßes Netzwerk mit Master und Slaves,
Fig. 2 die Auswirkungen einer Zeitsynchronisation aus dem Stand der Technik auf verschiedene Interrupts in verschiedenen Netzwerkteilnehmern
Fig. 3 erfindungsgemäße Zeitsynchronisation und deren Auswirkungen auf verschiedene Interrupts,
Fig. 4 den erfindungsgemäßen Zeitsynchronisationsmechanismus in einem Netzwerkteilnehmer, und
Fig. 5 ein Netzwerk mit Master und Slaves und hierarchisch untergeordnetem Netzwerk.

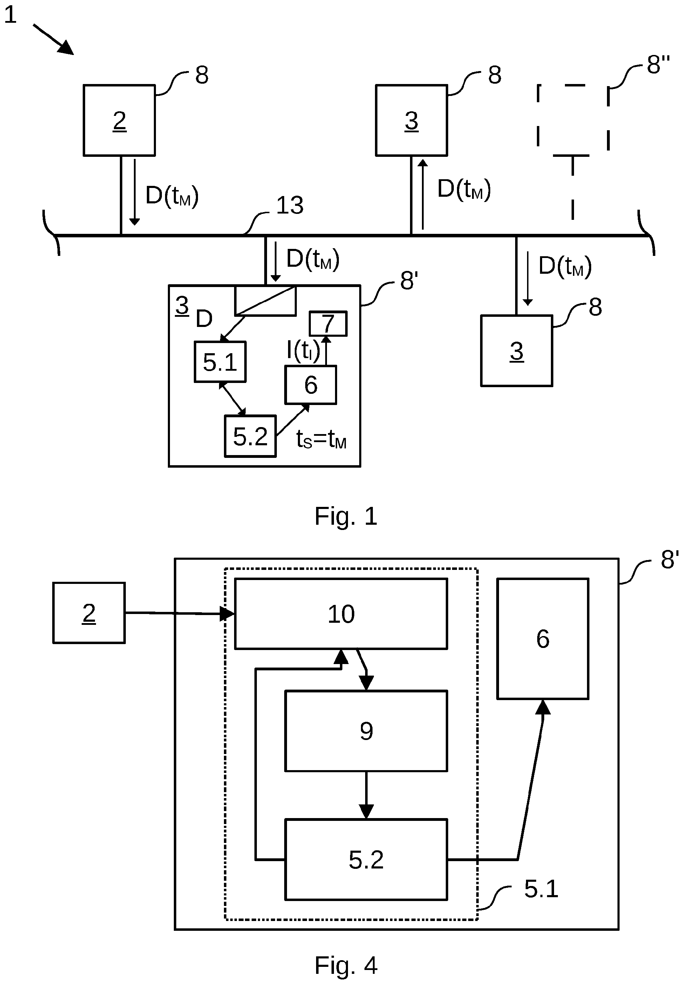

Fig. 1 zeigt ein beispielhaftes Netzwerk 1 mit mehreren Netzwerkteilnehmern 8, 8', 8" wobei zumindest ein Master 2 und mehrere Slaves 3 bezüglich eines Zeitabgleichs vorhanden sind. Die Netzwerkteilnehmer 8, 8', 8" sind über Netzwerkleitungen 13 miteinander verbunden. Oftmals bilden die Netzwerkleitungen 13 einen Datenbus zur Datenkommunikation zwischen den Netzwerkteilnehmern 8, 8', 8" aus, wie auch in Fig. 1 dargestellt. Die Netzwerkleitungen 13 können Lan-Kabel, Netzwerkbusse, Glasfaserkabel und ähnliches sein, welche eine Kommunikation im Netzwerk 1 zwischen den Netzwerkteilnehmern 8, 8', 8" erlauben. Zur Datenkommunikation kann ein beliebiges Kommunikationsprotokoll implementiert sein. Auch kann Netzwerkinfrastruktur vorgesehen sein, die verschiedene Netzwerke 1 oder verschiedene Abschnitte eines Netzwerkes 1 miteinander verbindet, wie beispielsweise Switches, Router usw. Auch drahtloser Datenverkehr mit Zeitsynchronisation über ein drahtloses Netzwerk, wie beispielsweise Wireless-Lan (WLAN), ist in einem Netzwerk 1, oder in Teilen von einem Netzwerk 1 denkbar. In diesem Fall ist die Netzwerkleitung 13 eine drahtlose Verbindung zwischen Netzwerkteilnehmern 8, 8', 8". Das Netzwerk 1 kann auch als gemischtes, drahtgebundenes und drahtloses Netzwerk 1 ausgeführt sein. Für das Netzwerk 1 sind alle Netzwerktopologien vorstellbar, welche für einen Fachmann geläufig sind und einen Datentransfer mit Zeitsynchronisation zwischen den Netzwerkteilnehmern 8, 8', 8" ermöglichen.

In einer Netzwerktopologie des Netzwerkes 1 kann eine Vielzahl von unterschiedlichen Netzwerkteilnehmern 8, 8', 8", wie z.B. Recheneinheiten, Bus-Module, Antriebsmodule, Bus-Koppler, IO-Module mit integrierter Netzwerk-Anbindung, Kameras, HMI-Geräte, netzwerkintegrierte Sensoren und Aktoren usw., vorhanden sein. Ein Netzwerkteilnehmer 8, 8', 8" umfasst üblicherweise einen Mikroprozessor 7, auf dem gespeicherter Programmcode ausgeführt wird, um eine bestimmte vorgesehene Funktionalität des Netzwerkteilnehmers 8, 8', 8" umzusetzen. Dazu kann auf einem Netzwerkteilnehmer 8, 8', 8" auch ein Betriebssystem installiert sein und laufen, wobei auf unterschiedlichen Netzwerkteilnehmern 8, 8', 8"unterschiedlichste Betriebssysteme, wie z.B. iOS, Linux/Unix, Windows, Android und ähnliche, laufen können.

Es ist im Netzwerk 1 zumindest ein interruptfähiger Netzwerkteilnehmer 8' vorhanden, welcher neben einer Uhr 5.2 auch einen Timer 6 aufweist. Der Timer 6 ist dazu vorgesehen, zumindest einen Interrupt I zu vorgegebenen Auslösezeitpunkten t_{I} zu erzeugen, wie dies in Fig. 1 gezeigt wird. Beispielsweise kann der Timer 6 einen Interrupt I in einem vorgegebenen Intervall abhängig von einer Zyklusdauer t_{C} auslösen. Der Interrupt I wird vorzugsweise im Mikroprozessor 7 verarbeitet, beispielsweise um damit den Ablauf eines Programmcodes zu steuern. Der Timer 6 greift dazu auf die Zeit einer Uhr 5.2 im interruptfähigen Netzwerkteilnehmer 8' zu. Da der interruptfähige Netzwerkteilnehmer 8' ein Slave 3 bezüglich der Zeitsynchronisation ist, ist die Zeit der Uhr 5.2 abhängig von der Masterzeit t_{M} des Masters 2 (Netzwerkteilnehmer 8) und daher eine Slavezeit t_{S}. Folglich nutzt der Timer 6 des Netzwerkteilnehmers 8' bzw. des Slaves 3 die Slavezeit t_{S}, um die Interrupts I zu den Auslösezeitpunkten t_{I} zu erzeugen.

Es kann aber auch weitere, interruptfähige Netzwerkteilnehmer 8" im Netzwerk 1 geben, wie in Fig. 1 strichliert angedeutet.

Eine noch nicht in Bezug auf die Masterzeit t_{M} synchronisierte Slavezeit t_{S} kann unterschiedlich bezüglich der Absolutzeit und der Frequenz sein. Beispielsweise kann die Slavezeit t_{S} um eine gewisse Zeitspanne, wie mehrere Jahre, Wochen, Tage, Stunden usw., unterschiedlich zur Masterzeit t_{M} sein, aber dieselbe Frequenz aufweisen. Damit wäre z.B. die Absolutzeit nicht ident. Die Slavezeit t_{S} im Slave 3 kann beispielsweise das Jahr 2019 aufweisen, während die Masterzeit t_{M} im Master 2 das Jahr 2021 aufweist. Die Masterzeit t_{M} und die Slavezeit t_{S} würden aber gleich schnell vergehen. Bei derselben Frequenz ist die nominelle Dauer beispielsweise von einer Sekunde gleich - d.h. im Master 2 und im Slave 3 vergehen die Sekunden gleich schnell. Jedoch ist es auch möglich und oftmals wahrscheinlich, dass vor einer Synchronisation weder Absolutzeit noch Frequenz zwischen Master 2 und Slave 3 gleich sind. Daher kann bei unterschiedlichen Frequenzen zwischen Slave 3 und Master 2 eine Zyklusdauer t_{C} eines Interrupts I im Master 2 und im Slave 3oder auch bei verschiedenen Slaves 3 zwar nominell gleich, aber tatsächlich unterschiedlich sein. Die gemessenen Zyklusdauern t_{C} der Interrupts I im Master 2, im Slave 3 oder in verschiedenen Slaves 3 können daher voneinander abweichen. Unterschiedliche Zyklusdauern t_{C} von Interrupts I können zu Problemen in hochgenauen Produktionsabläufen führen, an denen verschiedene Netzwerkteilnehmer 8, 8', 8" beteiligt sind, da dann beispielsweise die damit gesteuerten Programmcodes nicht hinreichend synchronisiert ablaufen.

Der Master 2 sendet an die Slaves 3 im Netzwerk 1 üblicherweise eine Synchronisationsnachricht D. Die Synchronisationsnachricht D enthält die aktuelle Masterzeit t_{M}. Beispielsweise kann die Synchronisationsnachricht D über einen Netzwerkport des Slaves 3 empfangen werden. Die enthaltende Masterzeit t_{M} wird im Slave 3 in einer Synchronisationseinheit 5.1 verarbeitet. Die Synchronisationseinheit 5.1 kann dazu auch im Mikroprozessor 7 implementiert sein, wobei die Synchronisationseinheit 5.1 software- und/oder hardwarebasiert sein kann und einen Programmcode bzw. eine Hardware-Schaltung ausführt. Die Synchronisationseinheit 5.1 gibt der Uhr 5.2 eine aktuelle Slavezeit t_{S} vor, die einer Masterzeit t_{M} aus der Synchronisationsnachricht D angeglichen wird. Die Synchronisationseinheit 5.1 kann auch in der Uhr 5.2 integriert sein. Die Synchronisationsnachrichten D können zu unterschiedlichen Zeiten an verschiedenen Slaves 3 ankommen. Das kann von der Position des jeweiligen Slaves 3 im Netzwerk 1, von der Netzwerktopologie und der Laufzeit der Synchronisationsnachricht D abhängig sein.

Die Synchronisationseinheit 5.1, im Wesentlichen in üblicher Implementierung ein entsprechender im Slave 3 ablaufender Programmcode, beispielsweise ein Synchronisationstack 10 (vergleiche Fig. 4), vergleicht die eigene aktuelle Slavezeit t_{S} mit der Masterzeit t_{M} aus der Synchronisationsnachricht D. Bevorzugterweise ist die Laufzeit der Synchronisationsnachricht D im Netzwerk 1 bekannt und wird von der Synchronisationseinheit 5.1 bei der Zeitsynchronisation mitberücksichtigt.

Die Synchronisationseinheit 5.1 gleicht die Absolutzeit und die Frequenz der Uhr 5.2 des Slaves 3 an den Master 2 an, sodass nach der Synchronisation die Slavezeit t_{S} der Masterzeit t_{M} entspricht, wie in Fig. 1 gezeigt, und sodass auch die Frequenz im Slave 3 der Frequenz im Master 2 entspricht. Die Frequenz kann beispielweise aus der errechneten Zeitdifferenz von mehreren aufeinanderfolgenden Synchronisationsnachrichten D genau berechnet werden.

Die vom Timer 6 im Slave 3 erzeugten Interrupts I können von gleicher nomineller Zyklusdauer t_{C} sein, es ist aber auch möglich, dass die Zyklusdauern t_{C} nach einem bestimmten, bekannten Schema unterschiedlich sind. Es kann auch mehrere Interrupts I mit verschiedenen nominellen Zyklusdauern t_{C} in einem einzigen interruptfähigen Netzwerkteilnehmer 8', 8" geben. Die Zyklusdauern t_{C} selbst können von der jeweiligen Anwendung, also beispielsweise von einem Software(stack) oder einer Applikation zum Steuern einer Maschine, im Netzwerkteilnehmer 8', 8" vorgegeben werden und sind normalerweise unabhängig von der Synchronisation. Es ist aber auch möglich, dass die Zyklusdauern t_{C} von einem User eingestellt werden, oder in einer Firmware von einem Hersteller vorgegeben sind.

Wie weiter unten noch ausgeführt, wird es allerdings im erfindungsgemäßen Verfahren auftreten, dass die Auslösezeitpunkte t_{I} der Interrupts I neu gesetzt werden müssen, damit die vorgegebenen Zyklusdauern t_{C} eingehalten werden können. Es kann auch das Ziel sein, dass die Interrupts I in verschiedenen interruptfähigen Netzwerkteilnehmern 8', 8" aufeinander abgestimmt sind und bleiben. Wie weit Auslösezeitpunkte t_{I} der Interrupts I verändert werden müssen, kann in diesem Fall (direkt oder indirekt) von der Synchronisationseinheit 5.1 vorgegeben werden.

Zum leichteren Verständnis der Erfindung wird in den folgenden Ausführungen, ohne Einschränkung der Allgemeinheit, auf unterschiedliche Zyklusdauern t_{C} verzichtet und alle Zyklusdauern t_{C} entsprechen der nominellen Zyklusdauer t_{C} des Interrupts I(2) des Masters 2, welcher auch ein interruptfähiger Netzwerkteilnehmer 8', 8" sein kann. Weiters wird angenommen, dass alle Slaves 3 die Synchronisationsnachrichten D zum gleichen Zeitpunkt erhalten.

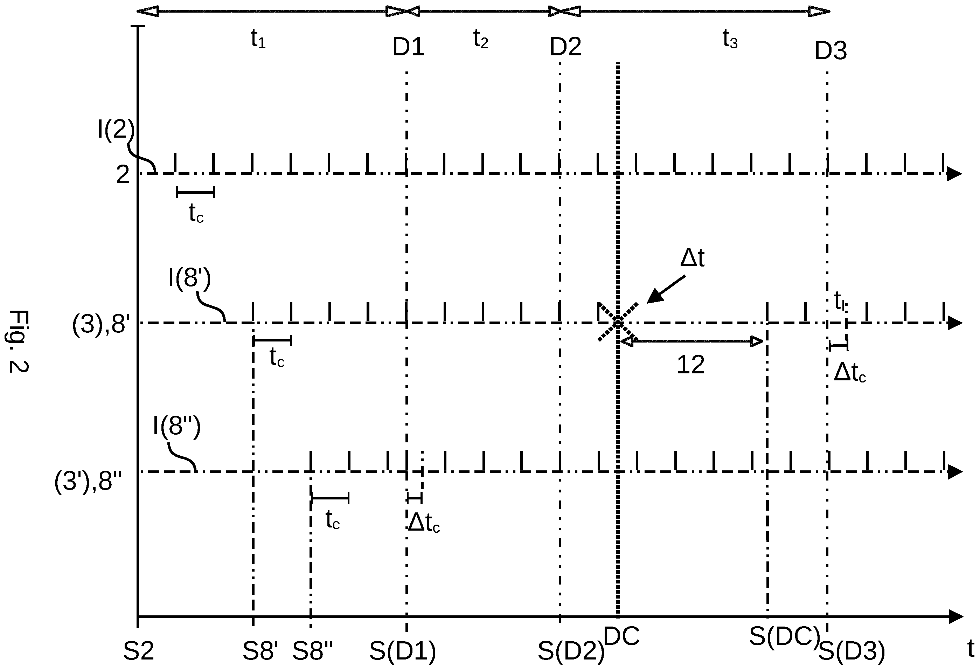

Die Synchronisation und deren Auswirkungen auf einen Interrupt I nach dem Stand der Technik sind in Fig. 2 dargestellt. Die Abszisse beschreibt eine Systemzeit t, und die Ordinate entspricht den verschiedenen Interrupts I(2), I(8'), I(8") der Netzwerkteilnehmer 8, 8', 8" im Netzwerk 1 als Zeitstrahlen. Der Master 2 hat einen Interrupt I(2) mit beispielsweise einer Zyklusdauer t_{C} von 1 Millisekunde (ms). Weiters sind ein Slave 3 als interruptfähiger Netzwerkteilnehmer 8' mit einem Interrupt I(8') und ein weiterer Slave 3' als weiterer interruptfähiger Netzwerkteilnehmer 8" mit einem Interrupt I(8") vorhanden. Die Interrupts I(8'), I(8") haben nominell dieselbe Zykluszeitdauer t_{C} wie der Interrupt I(2) des Masters 2. Jedoch kann eine reale Zyklusdauer t_{C,R} im jeweiligen Netzwerkteilnehmer 8', 8" aufgrund von unterschiedlichen Frequenzen der Uhren 5.2 in den interruptfähigen Netzwerkteilnehmern 8', 8" (Slaves 3) und auch relativ zum Master 2 unterschiedlich sein. Beispielweise, kann die tatsächliche Zyklusdauer t_{C,R} des interruptfähigen Netzwerkteilnehmer 8' 1020 µs sein, während die reale Zyklusdauer t_{C,R} des weiteren interruptfähigen Netzwerkteilnehmer 8" 980 µs sein kann. Es kann auch das Auslösen der verschiedenen Interrupts I(2), I(8'), I(8") durch den Timer 6 prinzipiell zu unterschiedlichen Auslösezeitpunkten t_{I} erfolgen. Somit können die verschiedenen Interrupts I(2), I(8'), I(8") auseinanderlaufen und beispielsweise nicht mehr aufeinander abgestimmt sein.

Die Zeitpunkte S2, S8', S8" der Interrupts I(2), I(8'), I(8") können unterschiedlich sein, beispielweise beim Hochfahren eines PCs, Initialisieren einer Produktionsmaschine usw., gegeben im Zeitbereich t1. Der Master 2 schickt nach einer gewissen Zeitspanne die erste Synchronisationsnachricht D1 über das Netzwerk 1 zu den Slaves 3, 3'. Über die erste Synchronisationsnachricht D1 werden, wie oben beschrieben, die Uhren 5.2 in den Slaves 3, 3'synchronisiert. Dabei werden die Slavezeiten t_{S} in den Slaves 3, 3' mittels Zeitsprung an die Masterzeit t_{M} angeglichen.

Im beschriebenen Ausführungsbeispiel wird angenommen, dass zum Zeitpunkt S(D1) alle Interrupts I(2), I(8'), I(8") synchron laufen sollen. Das ist aber nicht immer zwingend der Fall. Der Zeitsprung der Uhren 5.2 zum Zeitpunkt S(D1) führt beispielsweise dazu, dass der Interrupt I(8") verkürzt wird und einen, um einen Interruptversatz Δt_{C} zeitlich verkürzten Interrupt I(8") aufweist. Beim Hochfahren bzw. bei der Initialisierung kann ein einziger Zeitsprung, der die Absolutzeit im Slave 3 völlig angleicht, wie beim Zeitpunkt S(D1), unproblematisch sein, da ein Verkürzen des Interrupt I(8") noch keine Auswirkungen hat. So können beispielsweise bei einem Interrupt I(8'), I(8"), welcher eine nominelle Zyklusdauer t_{C} von 1000 µs lang ist, beim Zeitsprung erst 600 µs vergangen sein. Durch den Zeitsprung verliert dieser Interrupt I(8'), I(8")400 µs, also den Interruptversatz Δt_{C}, und beginnt neu zu laufen. Damit löst ein Timer 6 den Interrupt I(8"), wie in Fig. 2 beispielhaft gezeigt, also zum Zeitpunkt S(D1) aus, und der aktuelle Interrupt (8") ist um 400 µs verkürzt. Der Interrupt des Masters I(2) macht im Allgemeinen keinen Zeitsprung. Im Falle eines Wechsel des Masters 2 kann es aber durchaus wieder möglich sein, dass der Interrupt I(2) des bisherigen Master 2 als Slave 3 wieder Zeitsprünge durchführt.

Im Zeitbereich t2, zwischen erster Synchronisationsnachricht D1 und einer folgenden zweiten Synchronisationsnachricht D2 laufen die Interrupts I(2), I(8'), I(8") unverändert und in gewünschter Weise synchron zueinander weiter. Die Zeit zwischen den aufeinanderfolgenden Synchronisationsnachrichten D1 und D2 ist nicht zwingend gleich lang. Der Zeitbereich t2 kann sich weiters über eine große Anzahl an Synchronisationsnachrichten D ziehen und stellt den gewünschten Betriebsmodus dar.

Im Zeitbereich t3, also beispielsweise schon während des Betriebs einer Produktionsanlage, also während Produktionsabläufe im Gange sind und Steuerungsaufgaben durchgeführt werden, kann eine Unterbrechung zu einem Zeitpunkt DC erfolgen, und bei einem interruptfähigen Netzwerkteilnehmer 8' beispielhaft zu einer Unterbrechung führen. Das kann, wie oben erläutert, durch ein mechanisches Durchtrennen eines Kabels, ein Problem im Slave 3 oder Ähnlichem verursacht worden sein. Dabei kann der bereits laufende interruptfähige Netzwerkteilnehmer 8' (Slave 3) in einen Standby-Modus gehen, eine Fehlerbehebung starten oder ähnliche Vorgänge durchführen. Bei einer Unterbrechung zum Zeitpunkt DC verliert der interruptfähige Netzwerkteilnehmer 8' die Zeitsynchronisation zum Master 2. Dieser Ausfall 12 ist in Fig. 2 angedeutet. Der Interrupt I(8') kann nach Behebung der Unterbrechung, beispielsweise nach einen Neustart des Netzwerkteilnehmers 8', zu einem unterschiedlichen Zeitpunkt starten, beispielsweise beim Zeitpunkt S(DC). Es ist aber auch möglich, dass der Interrupt I(8') weiterläuft und z.B. kein Neustart des Netzteilnehmers 8' erfolgt, damit dieser seine Aufgaben weiterhin erfüllen kann.

Durch die Unterbrechung ist ein Zeitversatz Δt zwischen Masterzeit t_{M} und Slavezeit t_{S} entstanden. Dieser Zeitversatz Δt kann der Zeitspanne des Ausfalls 12 entsprechen, es kann aber auch eine beliebige Zeitspanne sein (je nachdem wie der Slave 3 wieder weiterarbeitet). Dieser Zeitversatz Δt bleibt bis zum Eintreffen einer dritten Synchronisationsnachricht D3 aufrecht. Damit sind die Auslösezeitpunkte t_{I} der Interrupts I(8') nicht mehr synchron zu den anderen Netzwerkteilnehmern 8, 8" und es kann sich diesen gegenüber ein Interruptversatz Δt_{C} einstellen. Der Zeitversatz Δt kann dem Interruptversatz Δt_{C} entsprechen. Es ist aber oftmals so, dass der Zeitversatz Δt um ein Vielfaches des Interruptversatzes Δt_{C} größer ist. Der Interruptversatz Δt_{C} wird zum Zeitpunkt S(D3), an dem die nächste Synchronisationsnachricht D3 eintrifft, wie zum Zeitpunkt S(D1) mit einem einzigen Zeitsprung korrigiert und der Interrupt I(8') ist damit an dieser Stelle um den Interruptversatz Δt_{C} verkürzt, läuft dann aber wieder synchron zum Master 2.

Beispielsweise hat zum Zeitpunkt S(D3) der Master 2 eine tatsächliche Zyklusdauer t_{C} von 1000 µs des Interrupts I(2) durchlaufen, während im interruptfähigen Netzwerkteilnehmer 8' nur eine tatsächliche Zyklusdauer t_{C,R} von 500 µs des Interrupts I(8') vergangen ist (obwohl die Zyklusdauer t_{C} auch nominell 1000 µs lang ist). Bei der Zeitsynchronisation mittels Synchronisationsnachricht D3 werden die fehlenden 500 µs des Interrupts I(8'), der Interruptversatz Δt_{C} des interruptfähigen Netzwerkteilnehmers 8', beim Zeitsprung übersprungen und resultieren in einer um einen Interruptversatz Δt_{C} verkürzten tatsächlichen Zyklusdauer t_{C,R} des Interrupts I(8'). Der nächste Auslösezeitpunkt t_{I} des Interrupts I(8') wird also dann auf den Zeitpunkt des Zeitsprungs in Reaktion auf die Synchronisationsnachricht D3 zum Zeitpunkt S(D3) gesetzt. Die folgenden Auslösezeitpunkte t_{I} des Interrupts I(8') ergeben sich dann aus der Zyklusdauer t_{C} des Interrupts I(8').

Beispielsweise kann der Zeitversatz Δt 3500 µs zwischen Masterzeit t_{M} und Slavezeit t_{S} sein, was aber nur einem, wie oben beschriebenen, Interruptversatz Δt_{C} von 500 µs entspricht. Das kann zu Problemen bei hochgenauen Arbeits- bzw. Produktionsabläufen führen, da der Timer 6 den nächsten Interrupt I(8') beispielsweise zu früh auslöst. Das Überspringen ist bei der Initialisierung im Zeitbereich t1 zwar unproblematisch, kann aber während des Betriebs zu Problemen führen, da beispielsweise ein bestimmter Programmcode nicht vollständig ausgeführt werden kann oder Regelparameter, wie z.B. die Ermittlung einer Geschwindigkeit, zu definierten Zeiten falsch berechnet werden. Es kann folglich nötig sein, einen Arbeitsablauf im Netzwerk 1 zu unterbrechen, um nach einem Verlust der Zeitsynchronisation eines Netzwerkteilnehmers 8' einen korrekten Ablauf der Interrupts I(8'), auch von anderen beteiligten Netzwerkteilnehmer 8, 8", wiederherzustellen.

Solche Unterbrechungen können im besten Fall einen Zeitverlust in der Produktion nach sich ziehen, oder im schlimmsten Fall Schäden an Maschinen oder anderen Teilen verursachen.

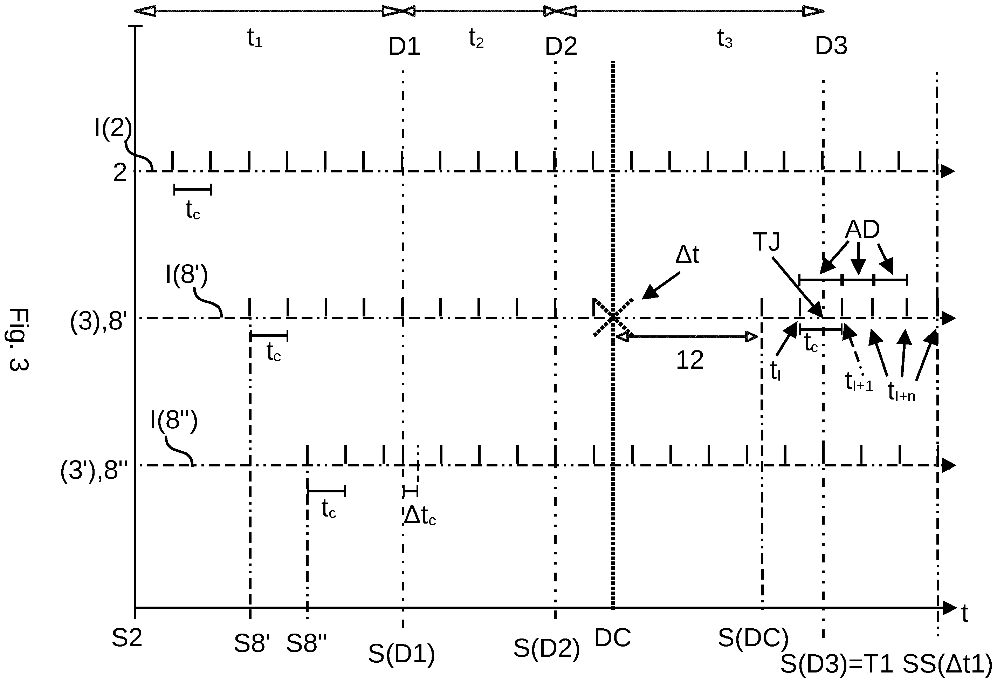

Eine erfindungsgemäße Synchronisation wird in Fig. 3 dargestellt. Der Zeitbereich t1 und Zeitbereich t2 entspricht im Wesentlichen denen aus Fig. 2 und wird nicht erneut beschrieben. Es kann aber auch vorgesehen sein, dass nach Starten der Interrupts I(2), I(8'), I(8") keine Zeitsprünge der Interrupts I(2), I(8'), I(8") mehr erfolgen sollen und es somit zu keiner Verkürzung der Interrupts I(2), I(8'), I(8") in einem Zeitbereich t1 kommt. In einer vorteilhaften Ausführungsform kommt es daher, sobald eine Applikation gestartet ist, welche die Interrupts I(2), I(8'), I(8") verwendet, zu keinen Zeitsprüngen der Interrupts I(2), I(8'), I(8"), welche die Zyklusdauer t_{C} der Interrupts I(2), I(8'), I(8"), wie zuvor beschrieben, verkürzt.

Im Zeitbereich t3 von Fig. 3 kommt es zum Zeitpunkt DC zu einem Verlust der Zeitsynchronisation im interruptfähigen Netzwerkteilnehmers 8'. Der Interrupt I(8') im interruptfähigen Netzwerkteilnehmer 8' beginnt entweder nach Behebung der Unterbrechung der Zeitsynchronisation, also nach einem Ausfall 12, wieder zu laufen oder kann auch während der Unterbrechung der Zeitsynchronisation durch den Ausfall 12 einfach weiterlaufen. Durch die Unterbrechung der Zeitsynchronisation wird allerdings die Slavezeit t_{S} im Netzwerkteilnehmer 8'beispielsweise einen gewissen Zeitraum (bis zum Eintreffen der nächsten Synchronisationsnachricht D3) nicht korrigiert. Der Interrupt I(8') wird jetzt zu einem Auslösezeitpunkt t_{I} ausgelöst, welcher abweichend zu den anderen Interrupts I(2), I(8") der anderen Netzwerkteilnehmer 8, 8" ist. Der Auslösezeitpunkt t_{I} des Interrupt I(8') ist somit diesen gegenüber um einen Interruptversatz Δt_{C} zeitlich versetzt, wie unten noch näher erläutert wird. Weiters kann die Slavezeit t_{S} beispielsweise davondriften. Dadurch wird der Interrupt I(8') zeitlich weiter versetzt, verglichen mit den anderen Interrupts I(2), I(8").

Beim Zeitpunkt S(D3) empfängt der interruptfähige Netzwerkteilnehmer 8' (so wie der andere vorhandene Slave 3' bzw. Netzteilnehmer 8") eine Synchronisationsnachricht D3 mit der Masterzeit t_{M}. Abhängig vom Ausfall 12 kann jetzt die Synchronisationseinheit 5.1 im interruptfähigen Netzwerkteilnehmer 8' gegenüber dem Master 2 einen Zeitversatz Δt in der Absolutzeit feststellen. Ebenso kann ein Unterschied in der Frequenz auftreten. Erfindungsgemäß wird dann ein Zeitanteil Δt₁ des Zeitversatzes Δt der Slavezeit t_{S} relativ zur Masterzeit t_{M} ermittelt, wobei der Zeitanteil Δt₁ des Zeitversatzes Δt der Slavezeit t_{S} einem ganzzahligen Vielfachem der Zyklusdauer t_{C} des zumindest einen Interrupts I des interruptfähigen Netzwerkteilnehmer 8' als Slave 3 entspricht. Somit kann der Interruptversatz Δt_{C} als Differenz aus dem Zeitversatz Δt und dem ermittelten Zeitanteil Δ*t*₁ ermittelt werden. Das kann beispielsweise durch klassische Subtraktion oder mittels einer Restwertberechnung erfolgen.

Erfindungsgemäß wird in einem ersten Schritt der gesamte Zeitversatz Δt von der Synchronisationseinheit 5.2 in zumindest einem Zeitsprung TJ ausgeglichen, wie auch in Fig. 3 angedeutet wird. Somit kann der Zeitversatz Δt zwischen Masterzeit t_{M} und Slavezeit t_{S} vorzugsweise in einem einzigen Zeitsprung TJ ausgeglichen werden. Es ist aber auch natürlich möglich, dass mehrere Zeitsprünge TJ verwendet werden.

Eine allfällige Abweichung zwischen der Frequenz im Master 2 und im Slave 3 bzw. dem Netzwerkteilnehmer 8' kann dabei ebenso ausgeglichen werden.

Wie im Stand der Technik, wie mit Bezugnahme auf die Fig. 2 erläutert, würde aus dem Zeitsprung TJ ein verkürzter Interrupt I(8') des interruptfähigen Netzwerkteilnehmer 8' resultieren und zu den oben beschriebenen Problemen führen. Das erfindungsgemäße Verfahren verhindert diesen verkürzten Interrupt I wie folgendermaßen erläutert wird.

Um keine Verkürzung des Interrupts I(8') im interruptfähigen Netzwerkteilnehmer 8' zu erzeugen, wird ein erster, auf den Zeitsprung TJ folgender Auslösezeitpunkt t_{I+1} des zumindest einen Interrupts I(8') so gesetzt, dass dieser Auslösezeitpunkt t_{I+1} nach dem Zeitsprung TJ um die Zyklusdauer t_{C} gegenüber dem letzten Auslösezeitpunkt t_{I} vor dem Zeitsprung TJ versetzt ist. Im Gegensatz zum in Fig. 2 dargestellten Stand der Technik wird also der Auslösezeitpunkt t_{I+1} des Interrupts I(8') nicht auf den Zeitpunkt S(D3) der Synchronisationsnachricht D3 gesetzt. Die folgenden Auslösezeitpunkte t_{I+n} würden dann wieder um die Zyklusdauer t_{C} zeitlich versetzt sein. Die Auslösezeitpunkte t_{I+1}, t_{I+n} wären damit aber nicht synchron zu den Interrupts I(2), I(8") in den anderen Netzwerkteilnehmern 8, 8".

Es ist daher vorgesehen, eine Anzahl N von auf den Zeitsprung TJ folgenden Auslösezeitpunkte t_{I+1}, t_{I+n} um eine Anpassungsdauer AD anzupassen, um die Interrupts I(2), I(8') auf diese Weise zu synchronisieren. Hierzu wird zumindest ein folgender Auslösezeitpunkt t_{I+n} mit einem Index n, welcher die Werte 1 bis N annehmen kann, um eine Anpassungsdauer AD zeitlich verschoben. Die Anzahl N der auf den Zeitsprung TJ folgenden Auslösezeitpunkte t_{I+n} kann damit auch den ersten, unmittelbar auf den Zeitsprung TJ folgenden Auslösezeitpunkt t_{I+1} umfassen. Gegebenenfalls kann die Anzahl N nur den ersten, auf den Zeitsprung TJ folgenden Auslösezeitpunkt t_{I+1} umfassen. Folglich laufen die Interrupts I(8') nach dem Zeitsprung TJ nach wie vor asynchron zu den anderen interruptfähigen Netzwerkteilnehmern 8, 8", bleiben im interruptfähigen Netzwerkteilnehmer 8' allerdings annähernd äquidistant. Diese Anpassung der Auslösezeitpunkte t_{I+n} durch die Anpassungsdauer AD erfolgt solange, bis der sich nach dem Zeitsprung TJ ergebende Interruptversatz Δt_{C} ausgeglichen ist und damit die Interrupts I(2), I(8'), I(8") in den Netzwerkteilnehmern 8, 8', 8" wieder synchron laufen. Die Zyklusdauern t_{C} der auf den Zeitsprung TJ folgenden Interrupts I(8') sind damit bis zum Ausgleich des Interruptversatzes Δt_{C} nicht notwendigerweise gleich lange.

Die Anpassungsdauer AD für den zumindest einen folgenden Auslösezeitpunkt t_{I+n} wird aus einem Zeitbereich gewählt, welcher von einem Wert 0 bis zu einem Wert, welcher dem Interruptversatz Δt_{C} entspricht, reicht - d.h. die Anpassungsdauer AD entspricht damit höchstens dem Interruptversatz Δt_{C}. Die Anpassungsdauer AD entspricht weiters höchstens einer vorgegebenen zeitlichen Abweichung dt. Mit der vorgegebenen zeitlichen Abweichung dt wird sichergestellt, dass sich die Zyklusdauer t_{C} eines der folgenden Auslösezeitpunktes t_{I+n} nach einem Zeitsprung TJ nicht zu sehr zeitlich verlängert oder verkürzt. Die zeitliche Abweichung dt wird geeignet gewählt und kann auch abhängig von der Anwendung sein, in der das Netzwerk 1 betrieben wird. Um sicherzustellen, dass durch die Anpassungsdauern AD auch der Interruptversatz Δt_{C} ausgeglichen wird, ist ferner vorgesehen, dass die Summe aller Anpassungsdauern AD für die Anzahl N der aufeinanderfolgenden Auslösezeitpunkte t_{I+n} nach dem Zeitsprung TJ dem Interruptversatz Δt_{C} unter Berücksichtigung (z.B. plus/minus) eines vorgegebenen Toleranzwertes G entspricht. Aufgrund dieser Bedingungen und Vorgaben stellt sich bei einem ergebenen Interruptversatz Δt_{C} auch die Anzahl N der folgenden Auslösezeitpunkte t_{I+n} ein. Damit wird sichergestellt, dass der Interrupt I(8') im Netzwerkteilnehmer 8' bei einem Index n=N Auslösezeitpunkten t_{I+n} nach dem Zeitsprung TJ an die Interrupts I(2), I(8") in den anderen Netzwerkteilnehmer 8, 8" angeglichen ist und dabei maximal eine zeitliche Abweichung in Höhe des vorgegebenen Toleranzwertes G verbleibt, der hinreichend klein gewählt werden kann. Im Idealfall ist der Toleranzwert G=0.

Die Anpassungsdauern AD für jeden der Auslösezeitpunkte t_{I+n} der Anzahl N müssen nicht gleich sein, aber jede Anpassungsdauer AD muss den erwähnten Kriterien und Vorgaben entsprechen.

In bestimmten Fällen kann damit der Interruptversatz Δt_{C} bereits im ersten (n=1), auf den Zeitsprung TJ folgenden Auslösezeitpunkt t_{I+1} ausgeglichen werden. Üblicherweise wird dafür aber eine Mehrzahl von auf den Zeitsprung TJ folgenden Auslösezeitpunkten t_{I+n} benötigt.

Je nach der Höhe des Interruptversatzes Δt_{C} kann es beispielsweise möglich sein, unter Einhaltung der vorgegebenen zeitlichen Abweichung dt in nur einem einzigen, über die Anpassungsdauer AD korrigierten folgenden Auslösezeitpunkt t_{I+n} den Interrupt I(8') abzugleichen. Es kann aber natürlich auch nötig sein, eine solche Anpassung über eine Mehrzahl an folgenden Auslösezeitpunkten t_{I+n} durchzuführen.

Beispielsweise kann eine Zyklusdauer t_{C}, wie im obigen Beispiel in Fig. 3, 1000 µs und der Zeitversatz Δt der Slavezeit t_{S} von der Masterzeit t_{M} 100.300 µs betragen. Beim Zeitpunkt S(D3) in Fig. 3 werden die ganzzahligen Vielfachen der Zyklusdauer t_{C} des Interrupts I(8'), nämlich 100.000 µs - also 100 mal 1000 µs - errechnet und damit der Interruptversatz Δt_{C} bestimmt. Dieses ganzzahlige Vielfache der Zyklusdauer t_{C} wird in gegenständlicher Erfindung auch als Zeitanteil Δt₁ des Zeitversatzes Δt bezeichnet. Der Interruptversatz Δt_{C} ist die Differenz zwischen Zeitanteil Δt₁ und Zeitversatz Δt. Der Interruptversatz Δt_{C} wird erfindungsgemäß in einer Anzahl N dem Zeitsprung TJ folgenden Auslösezeitpunkten t_{I+n} nach dem Zeitsprung TJ angepasst. Der verbleibende Interruptversatz Δt_{C} kann dabei auch nach jedem folgenden Auslösezeitpunkt t_{I+n} neu ermittelt werden. Bei einer Mehrzahl an Interrupts I im interruptfähigen Netzwerkteilnehmer 8', 8", welche als Slave 3 verwendet werden, können diese Korrekturen der Auslösezeitpunkte t_{I+n} für jeden einzelnen Interrupt I bestimmt werden.

Zur Berechnung des Zeitanteils Δt₁ und des Interruptversatz Δt_{C} kann man den Zeitversatz Δt zum Master 2 und die Zyklusdauer t_{C} des Interrupts I verwenden, wobei beide bekannt sind:
Im obigen Beispiel ist der ermittelte Zeitversatz Δt 100.300 µs, also die Differenz der Slavezeit t_{S} von der Masterzeit t_{M} zum Zeitpunkt S(D3), der Interruptversatz Δt_{C} 300 µs und der Zeitanteil Δt₁ 100.000 µs. Der Zeitversatz Δt wird durch den Zeitsprung TJ sofort korrigiert. Die vorgegebene Abweichung dt kann beispielsweise 10% der Zyklusdauer t_{C} des Interrupts I(8') betragen. Folglich kann eine tatsächliche Zyklusdauer t_{C,R} eines 1000µs langen Interrupts I(8') im Bereich von 900 µs bis 1100 µs adaptiert werden. Der Interruptversatz Δt_{C} könnte dann in drei folgenden Auslösezeitpunkten t_{I+n} ausgeglichen werden, in dem die jeweilige Zyklusdauer t_{C} um jeweils 100µS verlängert oder verkürzt wird (je nach Vorzeichen des Interruptversatzes Δt_{C}).

In jedem der n=1, ..., N auf den Zeitsprung TJ folgenden Auslösezeitpunkte t_{I+n} weicht eine sich einstellende tatsächliche Zyklusdauer t_{C,R} des zumindest einen Interrupts I(8') maximal um eine vorgegebene Abweichung dt von der vorgegebenen Zyklusdauer t_{C} ab. Somit ist die vorgegebene Abweichung dt limitiert, um eine hinreichende Äquidistanz des Interrupts I(8') nach dem Zeitsprung TJ zu garantieren.

Die Höhe der vorgegebenen, zeitlichen Abweichung dt kann abhängig von der Anwendung und der nötigen Genauigkeit sein, und kann im Slave 3 vorgegeben sein oder eingestellt werden. Beispielsweise kann die Abweichung dt in einem bevorzugten Bereich zwischen 0,5 und 5% der bekannten Zyklusdauer t_{C} des Interrupts I(8') gewählt werden.

Der Toleranzwert G kann beispielweise ein definierter Prozentsatz der bekannten Zyklusdauer t_{C} des Interrupts I(8') sein. Es ist aber auch vorstellbar, dass der Toleranzwert G beispielsweise ein Festwert ist, wie z.B. 10 Nanosekunden (ns).

Damit kann der Timer 6 den Interrupt I(8') zu veränderten Auslösezeitpunkten t_{I+n} auslösen, um für verkürzte oder verlängerte tatsächliche Zyklusdauern t_{C,R} des Interrupts I(8') zu sorgen. Folglich wird jeweils ein Interrupt I(8') zu einem folgenden Auslösezeitpunkt t_{I+n} ausgelöst, bevor die nächste Verkürzung/Verlängerung eingestellt werden kann.

Somit wird der Interruptversatz Δt_{C} in einer Anzahl n=1, ..., N an auf den Zeitsprung TJ folgenden Auslösezeitpunkten t_{I+n} sukzessive korrigiert, wobei die vorgegebene Zyklusdauer t_{C} des Interrupts I(8') nur um eine Anpassungsdauer AD verkürzt oder verlängert wird. Es ist natürlich möglich, dass der nach dem Zeitsprung TJ verbleibende Interruptversatz Δt_{C} so klein ist, dass eine Anpassung mittels der Anpassungsdauer AD eines einzigen, dem Zeitsprung TJ folgenden Auslösezeitpunkt t_{I+n} zur Korrektur ausreicht.

Durch die oben beschriebene Art der Korrektur des Interruptversatzes Δt_{C} wird sichergestellt, dass eine Zyklusdauer t_{C} des Interrupts I(8') nicht zu stark zeitlich verkürzt oder verlängert wird, was ansonsten zu den oben beschriebenen Problemen führen kann.

Nach dem Zeitsprung TJ kann die Synchronisationseinheit 5.1 im Slave 3 mittels der Anzahl N der dem Zeitsprung TJ folgenden Auslösezeitpunkte t_{I+n} des Interrupts I(8') über den Timer 6 die Angleichung des Interrupts I(8') an die anderen Interrupts I(2), I(8") durchführen.

In Fig. 3 ist das Angleichen der Interrupts I(2), I(8'), I(8") exemplarisch gezeigt. Der erste, auf den Zeitsprung TJ folgende Auslösezeitpunkt t_{I+1} wird nicht auf den Zeitpunkt S(D3) gesetzt, sondern ist unter Einhaltung der Zyklusdauer t_{C} um diese gegenüber dem Auslösezeitpunkt t_{I} vor dem Zeitsprung TJ versetzt. In diesem Ausführungsbeispiel wurde die Anpassungsdauer AD für den ersten, auf den Zeitsprung TJ folgenden Auslösezeitpunkt t_{I+1} mit Null gewählt. In Fig. 3 weisen die folgenden Auslösezeitpunkte t_{I+n}, aufgrund der jeweils gewählten Anpassungsdauer AD tatsächliche Zyklusdauern t_{C,R} auf, welche kürzer als die vorgegebene Zyklusdauer t_{C} des Interrupts I(8') sind. In diesen folgenden Auslösezeitpunkten t_{I+n} wird der sich ergebende Interruptversatz Δt_{C} ausgeglichen. In diesen folgenden Auslösezeitpunkten t_{I+n} des Interrupts I(8') weicht die tatsächliche Zyklusdauer t_{C,R} von der vorgegebenen Zyklusdauer t_{C} des Interrupts I(8') jeweils um die vorgegebene Abweichung dt ab, und wird beispielsweise um diese verkürzt. Damit erhält der Interrupt I(8') eine tatsächliche Zyklusdauer t_{C,R} über die folgenden Auslösezeitpunkte t_{I+n}, die - im in Fig. 3 dargestellten Beispiel - z.B. kürzer als die vorgegebene Zyklusdauer t_{C} ist. Die tatsächliche Zyklusdauer t_{C,R} kann allerdings auch durch die vorgegebene Abweichung dt vergrößert werden und damit dann länger als die vorgegebene Zyklusdauer t_{C} des Interrupts I(8') sein. Die jeweiligen folgenden Auslösezeitpunkte t_{I+n} werden von der Synchronisationseinheit 5.1 beispielsweise in einer, in der Synchronisationseinheit 5.1 vorhandenen Anpassungseinheit 9 (Fig.4), durchgeführt unter Einhaltung der vorgegebenen Anpassungsdauer AD und deren Restriktionen.

Fig. 4 zeigt eine beispielhafte Ausführung eines interruptfähigen Netzwerkteilnehmers 8' als Slave 3 mit einer Synchronisationseinheit 5.1 und mit Uhr 5.2 (andere Einheiten des Slaves 3 sind aus Gründen der Einfachheit nicht dargestellt). Ein Zeitsynchronisationsstack 10, beispielsweise ein Programmcode, berechnet den Zeitversatz Δt zum Master 2 mittels der Synchronisationsnachricht D bzw. der darin enthaltenen Masterzeit t_{M}. Die Anpassungseinheit 9 (beispielsweise ebenfalls Programmcode) benutzt den Zeitversatz Δt um den Zeitanteil Δt₁ zu errechnen und die erfindungsgemäße Zeitsynchronisation durchzuführen und der Uhr 5.2 weiterzugeben. Die jeweils aktuelle Zeit der Uhr 5.2 wird dann dem Timer 6 vorgegeben, welcher die Interrupts I(8') zum jeweiligen Auslösezeitpunkt t_{I} bzw. zu den folgenden Auslösezeitpunkten t_{I+n} auslösen kann.

Die Anpassung der Interrupts I(8') kann in einem kürzeren zeitlichen Intervall erfolgen, als Synchronisationsnachrichten D beim Slave 3 eintreffen.

In Fig. 3 synchronisiert die Synchronisationseinheit 5.1 beispielhafterweise so, dass der Interrupt I(8') mittels drei folgenden Auslösezeitpunkten t_{I+n} an die übrigen Interrupts I(2), I(8") angeglichen wird. Danach laufen alle Interrupts I(2), I(8'), I(8") zum Zeitpunkt SS mit der vorgegebenen Zyklusdauer t_{C} weiter und sind wieder angeglichen. Eine neuerliche Synchronisationsnachricht D ist in diesem Fall noch nicht eingetroffen.

Erfindungsgemäß adaptiert die Synchronisationseinheit 5.1 (bzw. der Timer 6) die Interrupts I(8') zu den folgenden Auslösezeitpunkten t_{I+n} über die Anpassungsdauer AD, sodass während der Synchronisation die tatsächliche Zyklusdauer t_{C,R} von der Zyklusdauer t_{C} maximal um die vorgegebene Abweichung dt abweicht.

Zur Veranschaulichung ist in der folgenden Tabelle ein exemplarischer Verlauf von Synchronisationsnachrichten D und die Zeitversätze Δt der Slavezeit t_{S} gegeben. Die Synchronisationsnachrichten D im folgenden Beispiel werden der Einfachheit halber fortlaufend mit D0 bis D2 bezeichnet. Erst beim Erhalt der Synchronisationsnachricht D wird in diesem Beispiel der Zeitanteil Δt₁ neu berechnet und die folgenden Auslösezeitpunkte t_{I+n} des Interrupts I neu festgelegt. Das geschieht so lange, bis sich die Interrupts wieder angeglichen haben (innerhalb des vorgegebenen Toleranzwertes G). Der Interruptversatz Δt_{C} wird beim Erhalt der Synchronisationsnachricht D errechnet, wie in der Tabelle weiter unten gezeigt wird. Die Synchronisation der Slavezeit t_{S} zur Masterzeit t_{M}, also die Korrektur des Zeitversatzes Δt, erfolgt vorteilhafterweise allerdings schon bei Erhalt der Synchronisationsnachricht D (mittels Zeitsprung TJ).

Vor der Synchronisationsnachricht D0 verliert der Slave 3 in diesem Beispiel die Synchronisation zum Master 2, beispielsweise aus oben beschriebenen Gründen. Zum Zeitpunkt der Synchronisationsnachricht D0 hat der Slave 3 einen Zeitversatz Δt in Höhe von 100.300 µs. Die Synchronisationseinheit 5.1 berechnet den Zeitversatz Δt anhand der erhaltenen Masterzeit t_{M} und führt zuerst den zumindest einen erfindungsgemäßen Zeitsprung TJ durch. Wie erwähnt muss der zumindest eine Zeitsprung TJ nicht zwingend in einem einzigen Schritt erfolgen, sondern kann auch in mehreren Schritten erfolgen. Zum Zeitpunkt der Synchronisationsnachricht D0 wird der Zeitsprung TJ durchgeführt und der verbleibende Interruptversatz Δt_{C} beträgt danach 300 µs. Zwischen den Synchronisationsnachrichten D0 und D1 führt die Synchronisationseinheit 5.1 mehrere Anpassungen der Anzahl N an Auslösezeitpunkte t_{I+n} über die Anpassungsdauer AD durch, wobei die aufeinanderfolgenden Auslösezeitpunkte t_{I+n} des Interrupts I zeitlich versetzt werden. Vor der Synchronisationsnachricht D1 ist der bei der Synchronisationsnachricht D0 identifizierte Interruptversatz Δt_{C} ausgeglichen und der Auslösezeitpunkt t_{I} kann wieder planmäßig ausgelöst werden. Beispielsweise ist vor dem Verlust der Zeitsynchronisation der Interrupt I im interruptfähigen Netzwerkteilnehmer 8' (Slave) alle 1000 µs ausgelöst worden, hatte also eine Zyklusdauer t_{C} von 1000 µs. Der dem Zeitsprung TJ folgende Auslösezeitpunkt t_{I+1} des Interrupts I kann über die Anpassungsdauer AD adaptiert werden. Der Interrupt I kann z.B. alle 900 µS ausgelöst werden und es ändert sich damit auch die tatsächliche Zykluszeit t_{C,R} des Interrupts I. Damit wird auch die maximale Abweichung dt ausgenützt und eingehalten. Es ist natürlich klar, dass bei negativen Zeitverschiebungen der dem Zeitsprung TJ folgende Auslösezeitpunkt t_{I+1} des Interrupts I auch zu höheren tatsächlichen Zykluszeiten t_{C,R} führen kann, wie beispielsweise 1050 µs. Die erfindungsgemäße Funktion wird in der Tabelle mit dem Interruptversatz Δt_{C} und der Anpassungsdauer AD beschrieben.

Abweichungen können zu verschiedensten Zeitpunkten durch Frequenzänderungen und Änderungen in der Absolutzeit auftreten und führen dazu, dass die Uhren 5.2 im Master 2 und im Slave 3 auseinanderlaufen. Folglich kann trotz zwischenzeitlicher Synchronisation bei einer neuen Synchronisationsnachricht D1 ein neuerlicher Zeitversatz Δt festgestellt werden. Dieser ist in Tabelle 1 bei der Synchronisationsnachricht D1 beispielhaft mit 450 µs gegeben.

Jetzt läuft die erfindungsgemäße Synchronisation wie bei der Synchronisationsnachricht D0 ab, mit einem Zeitsprung TJ und der folgenden Korrektur des Interruptversatzes Δt_{C}. Dabei wird nicht immer die maximale Abweichung dt in der Anpassungsdauer AD ausgenützt, sondern die Anpassungsdauer AD beträgt im letzten Schritt nur 50 µS.

| **Zeit** | **Synchroni sation** | **t_{C} [µs]** | **verbleibender Interruptversatz Δt_{C} [µs]** | **Zeitanteil Δt₁ [µs]** | **Anpassungsda uer AD [µS]** |
|---|---|---|---|---|---|
| **D0** | t_{I} | 1000 | 300 | 100000 | 0 |
| | t_{I+1} | 900 | 300 | 0 | 100 |
| | t_{I+2} | 900 | 200 | 0 | 100 |
| | t_{I+3} | 900 | 100 | 0 | 100 |
| | t_{I} | 1000 | 0 | 0 | 0 |
| **D1** | t_{I} | 1000 | 450 | 1000 | 0 |
| | t_{I+1} | 900 | 450 | 0 | 100 |
| | t_{I+21} | 900 | 350 | 0 | 100 |
| | t_{I+3} | 900 | 250 | 0 | 100 |
| | t_{I+4} | 900 | 150 | 0 | 100 |
| | t_{I+5} | 950 | 50 | 0 | 50 |
| **D2** | t_{I} | 1000 | 0 | 0 | 0 |

In einer vorteilhaften Ausführungsform wird in der Zeitsynchronisation die Zyklusdauer t_{C} nicht nur eines einzigen Interrupts I(8') in einem interruptfähigen Netzwerkteilnehmer 8' beachtet, sondern auch eine Mehrzahl an Zyklusdauern an Interrupts I. Beispielsweise kann ein Timer 6 einen ersten Interrupt I1 mit einer ersten Zyklusdauer t_{C,1} und einen zweiten Interrupt I2 mit einer zweiten Zyklusdauer t_{C,2} im interruptfähigen Netzwerkteilnehmer 8' erzeugen. Ebenso können dafür auch mehrere Timer 6 vorgesehen sein. Dann kann es nötig sein das erfindungsgemäße Verfahren auf jeden Interrupt I1, I2 separat anzuwenden.

Es ist auch denkbar, dass zwei, oder auch mehrere Netzwerke miteinander verbunden sind, welche zumindest einen Master und zumindest einen Slave aufweisen. Jedes Netzwerk kann dabei autonom laufen und kann für sich eine Zeitsynchronisation, wie oben beschrieben, ausführen. Es kann aber auch Anwendungen oder Situationen geben, in denen ein Netzwerk zeitlich mit einem weiteren Netzwerk synchronisiert werden muss. Das kann beispielsweise beim Hochfahren einer Anlage mit mehreren miteinander verbundenen Netzwerken notwendig sein. Dabei können die Netzwerke unabhängig voneinander starten und zuerst jedes Netzwerk intern eine beschriebene Zeitsynchronisation durchführen. Danach kann sich ein Netzwerk auf ein weiteres Netzwerk aufsynchronisieren. Es ist auch denkbar, dass ein Netzwerk zu einem weiteren Netzwerk hinzugeschaltet wird. Das kann beispielsweise passieren, wenn bei einer Anlage, die ein Netzwerk aufweist, eine Komponente (wie z.B. eine Maschine) hinzugefügt wird. Auch in solchen Situationen kann die oben beschriebene Zeitsynchronisation genutzt werden.

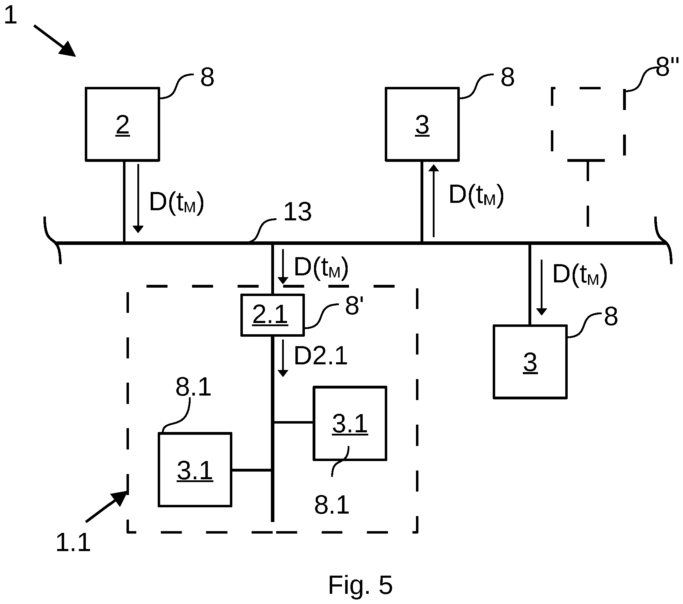

Hierbei wird davon ausgegangen, dass ein Netzwerk 1 - wie in Fig. 5 gezeigt - einen Master 2 und zumindest einen Slave 3 (interruptfähiger Netzwerkteilnehmer 8, 8', 8") aufweist. Ein weiteres Netzwerk 1.1 weist ebenso einen weiteren Master 2.1 und zumindest einen Slave 3.1 auf. Innerhalb jedes Netzwerkes 1, 1.1 erfolgt die Zeitsynchronisation, wie oben beschrieben, mittels Synchronisationsnachrichten D, D2.1 des jeweiligen Masters 2, 2.1. Um die Netzwerke 1, 1.1 aufeinander zu synchronisieren, agiert der weitere Master 2.1 des weiteren Netzwerkes 1.1 als Slave des Netzwerkes 1. Dieser weitere Master 2.1 ist hierfür mit dem Netzwerk 1 verbunden, wie in Fig. 5 dargestellt. Damit wird der als Slave des Netzwerkes 1 agierende weitere Master 2.1 über Synchronisationsnachrichten D vom Master 2 des Netzwerkes 1, wie oben beschrieben, zeitlich synchronisiert. Damit kann der weitere Master 2.1 nun die Slaves 3.1 im eigenen, weiteren Netzwerk 1.1 mittels Synchronisationsnachricht D2.1 zeitlich synchronisieren.

Zu diesem Zweck ist es vorteilhaft, wenn eine Netzwerkhierarchie festgelegt ist, die vorgibt, welches Netzwerk 1, 1.1 für die Zeitsynchronisation als weiteres bzw. untergeordnetes Netzwerk 1.1 arbeitet, das sich auf das Netzwerk 1 aufsynchronisiert, welches als übergeordnetes Netzwerk 1 in Bezug auf die Zeitsynchronisation fungiert.

## Patentansprüche

1. Verfahren zur Zeitsynchronisation zwischen zumindest einem Master (2) und zumindest einem Slave (3) in einem Netzwerk (1),
wobei der zumindest eine Master (2) eine Masterzeit (t_{M}) vorgibt und zumindest eine Synchronisationsnachricht (D) mit der Masterzeit (t_{M}) über das Netzwerk (1) an den zumindest einen Slave (3) sendet,
wobei der zumindest eine Slave (3), auf welchem eine Slavezeit (t_{S}) läuft, die Synchronisationsnachricht (D) verwendet, um die Slavezeit (t_{S}) an die Masterzeit (t_{M}) mittels Synchronisation anzugleichen,
wobei der zumindest eine Slave (3) ein interruptfähiger Netzwerkteilnehmer (8', 8") des Netzwerkes (1) ist und einen Timer (6) verwendet, welcher auf die Slavezeit (t_{S}) zugreift, um zumindest einen Interrupt (I), welcher mit einer vorgegebenen Zyklusdauer (t_{C}) wiederholt wird, zu jeweils einem, auf die Slavezeit (t_{S}) synchronisierten Auslösezeitpunkt (t_{I}) zu erzeugen,
wobei bei Eintreffen einer Synchronisationsnachricht (D) im Slave (3) ein Zeitversatz (Δt) zwischen der Masterzeit (t_{M}) und der Slavezeit (t_{S}) ermittelt wird,
**dadurch gekennzeichnet, dass** ein Zeitanteil (Δt₁) des Zeitversatzes (Δt) ermittelt wird, wobei der Zeitanteil (Δt₁) einem ganzzahligen Vielfachen der vorgegebenen Zyklusdauer (t_{c}) des zumindest einen Interrupts (I) entspricht,
**dass** ein Interruptversatz (Δt_{C}) aus dem Zeitanteil (Δt₁) und dem Zeitversatz (Δt) als Differenz ermittelt wird;
**dass** von einer Synchronisationseinheit (5.1) im Slave (3) für einen Ausgleich des gesamten Zeitversatzes (Δt) zumindest ein Zeitsprung (TJ) ausgeführt wird;
**dass** ein erster auf den zumindest einen Zeitsprung (TJ) folgender Auslösezeitpunkt (t_{I+1}) des zumindest einen Interrupts (I) derart gesetzt wird, dass der erste, auf den zumindest einen Zeitsprung (TJ) folgende Auslösezeitpunkt (t_{I+1}) zum letzten Auslösezeitpunkt (t_{I}) vor dem zumindest einen Zeitsprung (TJ) um die vorgegebene Zyklusdauer (t_{C}) versetzt ist; **und dass** eine Anzahl (N) von auf den zumindest einen Zeitsprung (TJ) folgenden Auslösezeitpunkten (t_{I+n}) des zumindest einen Interrupts (I) um eine Anpassungsdauer (AD) zeitlich verschoben wird, wobei die Anpassungsdauer (AD) für jeden Auslösezeitpunkt (t_{I+n}) der Anzahl der (N) auf den zumindest einen Zeitsprung (TJ) folgenden Auslösezeitpunkte (t_{I+n}) aus einem Zeitbereich derart gewählt wird, dass die Anpassungsdauer (AD) höchstens dem Interruptversatz (Δt_{C}) sowie höchstens einer vorgegebenen, zeitlichen Abweichung (dt) entspricht, und dass die Summe aller Anpassungsdauern (AD) für die Anzahl (N) der auf den zumindest einen Zeitsprung (TJ) folgenden Auslösezeitpunkte (t_{I+n}) dem Interruptversatz (Δt_{C}) unter Berücksichtigung eines vorgegebenen Toleranzwert (G) entspricht.

2. Verfahren nach Anspruch 1, **dadurch gekennzeichnet, dass** der interruptfähige Netzwerkteilnehmer (8', 8") als ein weiteres Netzwerk (1.1) mit einem weiteren Master (2.1) ausgestaltet ist, wobei der zumindest eine Master (2) des Netzwerkes (1) dem weiteren Master (2.1) des weiteren Netzwerkes (1.1) die Masterzeit (t_{M}) vorgibt.

3. Netzwerk bestehend aus einer Mehrzahl an Netzwerkteilnehmern (8, 8', 8"), wobei bezüglich einer Zeitsynchronisation zumindest ein Netzwerkteilnehmer (8, 8', 8") ein Master (2) mit einer Masterzeit (t_{M}) und zumindest ein weiterer Netzteilnehmer (8, 8', 8") ein Slave (3) mit einer Slavezeit (t_{S}) ist,
wobei der Master (2) ausgebildet ist, zumindest eine Synchronisationsnachricht (D) an den Slave (3) zu senden, und der Slave (3) ausgebildet ist, die Slavezeit (t_{S}) an die Masterzeit (t_{M}) mittels Synchronisation anzugleichen, und
wobei zumindest ein Netzwerkteilnehmer (8, 8', 8") ein interruptfähiger Netzwerkteilnehmer (8', 8") ist, welcher einen Timer (6) aufweist, um auf die Slavezeit (t_{S}) zuzugreifen, um zumindest einen in vorgegebenen Zyklusdauern (t_{C}) wiederholenden Interrupt (I) zu jeweils einem, auf die Slavezeit (t_{S}) synchronisierten Auslösezeitpunkt (t_{I}) zu erzeugen,
**dadurch gekennzeichnet, dass** der interruptfähige Netzwerkteilnehmer (8', 8") eine Synchronisationseinheit (5.1) aufweist, welche dazu ausgebildet ist, folgende Schritte auszuführen:
- Ermitteln eines Zeitversatzes (Δt) zwischen Masterzeit (t_{M}) und Slavezeit (t_{S}) bei Eintreffen einer Synchronisationsnachricht (D);
- Ermitteln eines Zeitanteils (Δt₁) des Zeitversatzes (Δt), wobei der Zeitanteil (Δt₁) einem ganzzahligen Vielfachen der vorgegebenen Zyklusdauer (t_{c}) des zumindest einen Interrupts (I) entspricht;
- Ermitteln eines Interruptversatzes (Δt_{C}) als Differenz aus dem Zeitanteil (Δt₁) und dem Zeitversatz (Δt);
- Ausführen zumindest eines Zeitsprungs (TJ) zum Ausgleich des gesamten Zeitversatzes (Δt) zwischen Masterzeit (t_{M}) und Slavezeit (t_{S});
- Setzen eines ersten, auf den zumindest einen Zeitsprung (TJ) folgenden Auslösezeitpunktes (t_{I+1}) für den zumindest einen Interrupt (I) derart, dass der erste, auf den zumindest einen Zeitsprung (TJ) folgende Auslösezeitpunkt (t_{I+1}) um die vorgegebene Zyklusdauer (t_{C}) zum letzten Auslösezeitpunkt (t_{I}) vor dem zumindest einen Zeitsprung (TJ) versetzt ist; und
- zeitliches Verschieben einer Anzahl (N) von auf den zumindest einen Zeitsprung (TJ) folgenden Auslösezeitpunkten (t_{I+n}) des zumindest einen Interrupts (I) um eine Anpassungsdauer (AD) , wobei die Anpassungsdauer (AD) für jeden Auslösezeitpunkt (t_{I+n}) der Anzahl (N) auf den zumindest einen Zeitsprung (TJ) folgenden Auslösezeitpunkte (t_{I+n}) aus einem Zeitbereich derart gewählt wird, dass die Anpassungsdauer (AD) höchstens dem Interruptversatz (Δt_{C}) sowie höchstens einer vorgegebenen, zeitlichen Abweichung (dt) entspricht, und dass eine Summe aller Anpassungsdauern (AD) für die Anzahl (N) auf den zumindest einen Zeitsprung (TJ) folgenden Auslösezeitpunkte (t_{I+n}) dem Interruptversatz (Δt_{C}) unter Berücksichtigung eines vorgegebenen Toleranzwertes (G) entspricht.

4. Netzwerk nach Anspruch 3, **dadurch gekennzeichnet, dass** der zumindest eine interruptfähige Netzwerkteilnehmer (8', 8") als weiteres Netzwerk (1.1) mit einem weiteren Master (2.1) ausgestaltet ist, wobei der zumindest eine Master (2) des Netzwerkes (1) dazu ausgebildet ist, dem weiteren Master (2.1) des weiteren Netzwerkes (1.1) die Masterzeit (t_{M}) vorzugeben.

## Claims

1. A method for the time synchronization between at least one master (2) and at least one slave (3) in a network (1),
wherein the at least one master (2) predefines a master time (t_{M}) and sends at least one synchronization message (D) with the master time (t_{M}) via the network (1) to the at least one slave (3),
wherein the at least one slave (3), on which a slave time (t_{S}) is running, uses the synchronization message (D) to adjust the slave time (t_{S}) to the master time (t_{M}) using synchronization, and
wherein the at least one slave (3) is an interrupt-capable network device (8', 8") of the network (1) and uses a timer (6), which accesses the slave time (t_{S}) to generate at least one interrupt (I), which is repeated at a predefined cycle duration (t_{C}), at a respective trigger point in time (t_{I}) that is synchronized with the slave time (t_{S}),
wherein, when a synchronization message (D) arrives, a time offset (Δt) between the master time (t_{M}) and the slave time (t_{S}) is determined in the slave (3),
**characterized in that,** a time fraction (Δt₁) of the time offset (Δt) is determined, the time fraction (Δt₁) corresponding to an integer multiple of the predefined cycle duration (t_{c}) of the at least one interrupt (I),
**that** an interrupt offset (Δt_{C}) is determined from the time fraction (Δt₁) and the time offset (Δt) as difference;
**that** at least one time jump (TJ) is carried out by a synchronization unit (5.1) in the slave (3) to compensate for the whole time offset (Δt);
**that** a first trigger point in time (t_{I+1}) of the at least one interrupt (I) following the at least one time jump (TJ) is set in such a way that the first trigger point in time (t_{I+1}) following the at least one time jump (TJ) is offset by the predefined cycle duration (t_{C}) in relation to the last trigger point in time (t_{I}) prior to the at least one time jump (TJ);
**and that** a number (N) of trigger points in time (t_{I+n}) of the at least one interrupt (I) which follow the at least one time jump (TJ) is temporally shifted by an adaptation duration (AD), the adaptation duration (AD) for each trigger point in time (t_{I+n}) of the number (N) of the trigger points in time t(_{I+n}) following the at least one time jump (TJ) being selected from a time range in such a way that the adaptation duration (AD) corresponds at most to the interrupt offset (Δt_{C}) and at most to a predefined temporal deviation (dt), and that the sum of all adaptation durations (AD) for the number (N) of the trigger points in time (t_{I+n}) following the at least one time jump (TJ) corresponds to the interrupt offset (Δt_{C}), taking a predefined tolerance value (G) into consideration.

2. The method according to claim 1, **characterized in that** the interrupt-capable network component (8', 8") is configured as a further network (1.1) with a further master (2.1), wherein the at least one master (2) of the network (1) predefines the master time (t_{M}) to the further master (2.1) of the further network (1.1).

3. A network comprised of a plurality of network components (8, 8', 8"), wherein, with respect to a time synchronization, at least one network component (8, 8', 8") is a master (2) with a master time (t_{M}) and at least one further network component (8, 8', 8") is a slave (3) with a slave time (t_{S}),
wherein the master (2) is designed to send at least one synchronization message (D) to the slave (3), and the slave (3) is designed to adjust the slave time (t)_{S}) to the master time (t_{M}) using synchronization, and
wherein at least one network component (8, 8', 8") is an interrupt-capable network component (8', 8"), which has a timer (6) to access the slave time (t_{S}) in order to generate at least one interrupt (I), which recurs at predefined cycle durations (t_{C}), at a respective trigger point in time (t_{I}) that is synchronized with the slave time (t_{S}),
**characterized in that** the interrupt-capable network component (8', 8") has a synchronization unit (5.1), which is designed to carry out the following steps:
- determining a time offset (Δt) between the master time (t_{M}) and the slave time (t_{S}) when a synchronization message (D) arrives;
- determining a time fraction (Δt₁) of the time offset (Δt), the time fraction (Δt₁) corresponding to an integer multiple of the predefined cycle duration (t_{c}) of the at least one interrupt (I);
- determining an interrupt offset (Δt_{C}) as difference between the time fraction (Δt₁) and the time offset (Δt);
- carrying out at least one time jump (TJ) as compensation for the whole time offset (Δt) between the master time (t_{M}) and the slave time (t_{S});
- setting a first trigger point in time (t_{I+1}) for the at least one interrupt (I) which follows the at least one time jump (TJ) in such a way that the first trigger point in time (t_{I+1}) following the at least one time jump (TJ) is offset by the predefined cycle duration (t_{C}) in relation to the last trigger point in time (t_{I}) prior to the at least one time jump (TJ); and
- temporally shifting a number (N) of trigger points in time (t_{I+n}) of the at least one interrupt (I) which follow the at least one time jump (TJ) by an adaptation duration (AD), wherein the adaptation duration (AD) for each trigger point in time (t_{I+n}) of the number (N) of trigger points in time (t_{I+n}) following the at least one time jump (TJ) is selected from a time range in such a way that the adaptation duration (AD) corresponds at most to the interrupt offset (Δt_{C}) and at most to a predefined temporal deviation (dt), and that a sum of all adaptation durations (AD) for the number (N) of trigger points in time (t_{I+n}) following the at least one time jump (TJ) corresponds to the interrupt offset (Δt_{C}), taking a predefined tolerance value (G) into consideration.

4. The network according to claim 3, **characterized in that** the at least one interrupt-capable network component (8', 8") is configured as a further network (1.1) with a further master (2.1), wherein the at least one master (2) of the network (1) is designed to predefine the master time (t)_{M}) to the further master (2.1) of the further network (1.1).

## Revendications

1. Procédé de synchronisation temporelle entre au moins un maître (2) et au moins un esclave (3) dans un réseau (1),
dans lequel ledit au moins un maître (2) spécifie un temps maître (t_{M}) et envoie au moins un message de synchronisation (D) avec le temps maître (t_{M}) par le réseau (1) audit au moins un esclave (3),
dans lequel ledit au moins un esclave (3), sur lequel s'écoule un temps esclave (t_{S}), utilise le message de synchronisation (D) pour rapprocher le temps esclave (t_{S}) au temps maître (t_{M}) au moyen d'une synchronisation,
dans lequel ledit au moins un esclave (3) est un abonné au réseau (8', 8") capable d'interruption du réseau (1) et utilise un temporisateur (6) qui accède au temps esclave (t_{S}) pour générer au moins une interruption (I) qui est répétée avec une durée de cycle (t_{C}) spécifiée respectivement à un instant de déclenchement (t_{I}) synchronisé avec le temps esclave (t_{S}),
dans lequel, à l'arrivée d'un message de synchronisation (D) au niveau de l'esclave (3), un décalage temporel (Δt) entre le temps maître (t_{M}) et le temps esclave (t_{S}) est déterminé,
**caractérisé en ce qu'**une fraction temporelle (Δt₁) du décalage temporel (Δt) est déterminée, la fraction temporelle (Δt₁) correspondant à un multiple entier de la durée de cycle (t_{c}) spécifiée de ladite au moins une interruption (I),
**en ce qu'**un décalage d'interruption (Δt_{C}) est déterminé comme une différence à partir de la fraction temporelle (Δt₁) et du décalage temporel (Δt) ;
**en ce qu'**une unité de synchronisation (5.1) au niveau de l'esclave (3) effectue au moins un saut temporel (TJ) pour compenser l'ensemble du décalage temporel (Δt) ;
**en ce qu'**un premier instant de déclenchement (t_{I+1}), suivant ledit au moins un saut temporel (TJ), de ladite au moins une interruption (I) est défini de telle sorte que le premier instant de déclenchement (t_{I+1}) suivant ledit au moins un saut temporel (TJ) soit décalé de la durée de cycle (t_{C}) spécifiée jusqu'au dernier instant de déclenchement (t_{I}) avant ledit au moins un saut temporel (TJ) ;
et **en ce qu'**un nombre (N) d'instants de déclenchement (t_{I+n}), suivant ledit au moins un saut temporel (TJ), de ladite au moins une interruption (I) est décalé dans le temps d'une durée d'adaptation (AD), dans lequel la durée d'adaptation (AD) pour chaque instant de déclenchement (t_{I+n}) du nombre (N) des instants de déclenchement (t_{I+n}) suivant ledit au moins un saut temporel (TJ) est sélectionnée dans une plage temporelle de telle sorte que la durée d'adaptation (AD) correspond au maximum au décalage d'interruption (Δt_{C}) et au maximum à un écart temporel (dt) spécifié, et **en ce que** la somme de toutes les durées d'adaptation (AD) pour le nombre (N) des instants de déclenchement (t_{I+n}) suivant ledit au moins un saut temporel (TJ) correspond au décalage d'interruption (Δt_{C}) en tenant compte d'une valeur de tolérance (G) spécifiée.

2. Procédé selon la revendication 1, **caractérisé en ce que** l'abonné au réseau (8', 8") capable d'interruption est configuré comme un autre réseau (1.1) avec un autre maître (2.1), dans lequel ledit au moins un maître (2) du réseau (1) spécifie le temps maître (t_{M}) à l'autre maître (2.1) de l'autre réseau (1.1).

3. Réseau, composé d'une pluralité d'abonnés au réseau (8, 8', 8"), dans lequel concernant une synchronisation temporelle, au moins un abonné au réseau (8, 8', 8") est un maître (2) avec un temps maître (t_{M}) et au moins un autre abonné au réseau (8, 8', 8") est un esclave (3) avec un temps esclave (t_{S}),
dans lequel le maître (2) est réalisé pour envoyer au moins un message de synchronisation (D) à l'esclave (3), et l'esclave (3) est réalisé pour rapprocher le temps esclave (t_{S}) du temps maître (t_{M}) au moyen d'une synchronisation, et
dans lequel au moins un abonné au réseau (8, 8', 8") est un abonné au réseau (8', 8") capable d'interruption qui présente un temporisateur (6) pour accéder au temps esclave (t_{S}) pour générer au moins une interruption (I) répétée avec des durées de cycle (t_{C}) spécifiées respectivement à un instant de déclenchement (t_{I}) synchronisé avec le temps esclave (t_{S}),
**caractérisé en ce que** l'abonné au réseau (8', 8") capable d'interruption présente une unité de synchronisation (5.1) qui est réalisée pour exécuter les étapes suivantes consistant à :
- déterminer un décalage temporel (Δt) entre le temps maître (t_{M}) et le temps esclave (t_{S}) à l'arrivée d'un message de synchronisation (D) ;
- déterminer une fraction temporelle (Δt₁) du décalage temporel (Δt), la fraction temporelle (Δt₁) correspondant à un multiple entier de la durée de cycle (t_{c}) spécifiée de ladite au moins une interruption (I) ;
- déterminer un décalage d'interruption (Δt_{C}) comme une différence à partir de la fraction temporelle (Δt₁) et du décalage temporel (Δt) ;
- effectuer au moins un saut temporel (TJ) pour compenser l'ensemble du décalage temporel (Δt) entre le temps maître (t_{M}) et le temps esclave (t_{S}) ;
- définir un premier instant de déclenchement (t_{I+1}) suivant ledit au moins un saut temporel (TJ) pour ladite au moins une interruption (I) de telle sorte que le premier instant de déclenchement (t_{I+1}) suivant ledit au moins un saut temporel (TJ) soit décalé de la durée de cycle (t_{C}) jusqu'au dernier instant de déclenchement (t_{I}) avant ledit au moins un saut temporel (TJ) ; et
- décaler dans le temps un nombre (N) d'instants de déclenchement (t_{I+n}), suivant ledit au moins un saut temporel (TJ), de ladite au moins une interruption (I) d'une durée d'adaptation (AD), dans lequel la durée d'adaptation (AD) pour chaque instant de déclenchement (t_{I+n}) du nombre (N) des instants de déclenchement (t_{I+n}) suivant ledit au moins un saut temporel (TJ) est sélectionnée dans une plage temporelle de telle sorte que la durée d'adaptation (AD) correspond au maximum au décalage d'interruption (Δt_{C}) et au maximum à un écart temporel (dt) spécifié, et **en ce qu'**une somme de toutes les durées d'adaptation (AD) pour le nombre (N) d'instants de déclenchement (t_{I+n}) suivant ledit au moins un saut temporel (TJ) correspond au décalage d'interruption (Δt_{C}) en tenant compte d'une valeur de tolérance (G) spécifiée.

4. Réseau selon la revendication 3, **caractérisé en ce que** ledit au moins un abonné au réseau (8', 8") capable d'interruption est configuré comme un autre réseau (1.1) avec un autre maître (2.1), dans lequel ledit au moins un maître (2) du réseau (1) spécifie le temps maître (t_{M}) à l'autre maître (2.1) de l'autre réseau (1.1).
